# EUROPÄISCHE PATENTSCHRIFT

(11) **EP 1 788 510 B1**
(45) Veröffentlichungstag und Bekanntmachung des Hinweises auf die Patenterteilung: **08.10.2008**
(21) Anmeldenummer: 06124323.4
(22) Anmeldetag: 17.11.2006
(51) Int. Cl.: G06K 7/10, G09B 21/00, G06K 7/14

(54) **Optische Braille-Schrift-Erkennung**
Optical Braille lettering recognition
Reconnaissance optique d'écriture en braille

(30) Priorität: 17.11.2005 DE 102005054962
(43) Veröffentlichungstag der Anmeldung: 23.05.2007
(73) Patentinhaber: Reiter, Mathias, 82515 Wolfratshausen (DE)
(72) Erfinder: Reiter, Mathias, 82515 Wolfratshausen (DE)
(74) Vertreter: Alber, Norbert

(56) Entgegenhaltungen:
- EP-A- 1 341 141
- EP-A2- 0 701 104
- FR-A- 2 531 793
- US-A- 5 920 649

## Beschreibung

### I. Anwendungsgebiet

Die Erfindung betrifft die berührungslose Erkennung der Braille-Schrift auf optischem Wege.

### II. Technischer Hintergrund

Die Bestimmung der Daten 3-dimensionaler Konturen, insbesondere von Erhebungen auf im Prinzip ebenen Basisflächen, wird in der Industrie häufig benötigt.

Die Ermittlung der Form oder anderer, mit der Oberflächenform zusammenhängender Ergebnisdaten, z. B. des Volumens der Erhebung wird dabei häufig mittels des Lichtschnittverfahrens durchgeführt, wie beispielsweise aus der EP-A-0 701 104 ersichtlich.

Dabei wird ein fächerförmiger, also in nur einer Ebene aufgespreizter, Lichtstrahl auf die zu untersuchende Oberfläche gegeben und unter einem Winkel, meist einem spitzen Winkel, zur Bestrahlungsrichtung beobachtet, so dass der Verlauf des Abbildes des fächerförmigen Strahles auf der Oberfläche dort vorhandene Erhebungen erkennen lässt, indem auch das beobachtete Abbild dann eine Erhöhung zeigt, wenn der linienförmig auftreffende Lichtstrahl-Fächer über diese Erhebung hinweg verläuft, (sofern die Verlaufsrichtung der Lichtlinie nicht parallel zur Verlaufsrichtung der Erhebung liegt.)

Derartige einzelne Bilder der Lichtlinie auf dem Objekt werden - während sich das Objekt relativ und in Querrichtung zur Lichtlinie bewegt - in kurzen zeitlichen Abständen vielfach angefertigt, so dass durch Hintereinanderstellung dieser einzelnen Höhenschnitte, also Scans, die 3-dimensionale Oberflächengestaltung ermittelt werden kann, und/oder damit zusammenhängende Parameter wie Höhe, Volumen, Breite, Lage der Erhebungen usw.

Die künstlich aufgebrachten Erhebungen werden in der Regel während des laufenden Herstellungsprozesses eines Objektes detektiert, so dass eine sehr hohe Erkennungsgeschwindigkeit und Verarbeitungsgeschwindigkeit dieser Konturermittlung notwendig ist, wenn beispielsweise das Objekt mit einer Geschwindigkeit von 600 m/min unter der Lichtlinie durchläuft.

Wenn das Detektieren beispielsweise mittels eines handelsüblichen Flächensensors mit 512 x 512 Pixeln mit 30 Hz, also 30 Scans pro Sekunde, erfolgt, müssen pro Sekunde fast 8 Millionen Datensätze verarbeitet werden, wenn pro Pixel nur ein Datensatz unterstellt wird. Ein Datensatz besteht jedoch mindestens aus zwei einzelnen Datenfeldern (Position und Lichtintensität), unter Umständen auch mehr.

Dementsprechend kann sowohl die Mindestzeit zwischen den einzelnen Scans, bedingt durch den optischen Sensor, als auch die Verarbeitungsgeschwindigkeit der so ermittelten Bilddaten durch die nachgeschaltete elektronische Auswerteeinheit die begrenzende Größe darstellen.

Die Mindestzeit zwischen den einzelnen Scans ist die Summe aus einerseits der immer benötigten, und im Wesentlichen auch gleich langen Belichtungszeit für den Sensor und der führt ans Auslesen der Bilddaten aus dem optischen Sensor in die nachgeschaltete Verarbeitungseinheit benötigte Zeit, wobei diese Auslesezeit je nach Sensortyp von der Anzahl der ausgelesenen Datensätze, also ausgelesenen Pixel, abhängen können.

Die Verarbeitungsgeschwindigkeit der ausgelesenen Bilddaten hängt einerseits von der zu verarbeitenden Datenmenge und andererseits von der Art der Verarbeitungsoperationen und deren Anzahl ab.

Im Idealfall ist die Zeit zum Verarbeiten der Datenmenge eines Scans gleich kurz oder kürzer als die Mindestzeit zwischen den einzelnen Scans, oder zumindest ist die durch den Verarbeitungsprozess vorgegebenen Mindestzeit zwischen den aufeinanderfolgenden Daten-Einleseoperationen der einzelnen Scans in die Verarbeitungseinheit gleich kurz oder kürzer als die Mindestzeit zwischen den Scans, indem die Verarbeitung der ausgelesenen Bilddaten sequenziell so erfolgt, dass der Zeitbedarf für die einzelnen Bearbeitungsstufen jeweils unter der Mindestzeit zwischen den Scans liegt.

Die sich so ergebende Scanfrequenz soll im Ergebnis so hoch liegen, dass bei maximaler Laufgeschwindigkeit des zu beobachtenden Objektes, also der Produktionsmaschine etc., die einzelnen Scans auf dem Objekt mit einen so kurzem räumlichen Abstand hintereinander durchgeführt werden, das eine quasilückenlose Überprüfung der interessierenden Oberflächendaten möglich wird.

Ein spezieller Anwendungsfall ist dabei die Erkennung und damit optische Kontrolle der richtigen und ausreichend deutlichen Aufbringung einer Braille-Schrift auf einer Oberfläche, z.B. der Ausprägung der punktförmigen Braille-Erhebungen aus einer Folie oder einem Karton, wie sie demnächst Pflicht bei allem Arzneimitteln sein wird.

Die Braille-Schrift besteht aus immer gleich großen Erhebungen, die in einem bestimmten Punktraster angeordnet sind, wobei das Vorhandensein oder Fehlen von Erhebungen an bestimmten Rasterpositionen oder nicht einen bestimmten Buchstaben bedeutet.

Damit sind zwar zum einen die möglichen Soll-Positionen der Erhebungen vorgegeben, andererseits müssen für eine Kontrolle sowohl die Position als auch die Höhe der Erhebungen der in der Aufsicht kreisrunden Erhebungen überprüft werden.

Angesichts der Vielzahl der auf einer Linie nebeneinander liegenden Erhebungen ist für eine Überprüfung in Echtzeit, also in-line, ein erheblicher technischer Aufwand notwendig.

Ferner sind andere Methoden bekannt, um Braille-Schrift abzutasten, die sich nicht des Lichtschnittverfahrens bedienen, sondern meist optischer, flächiger Verfahren. So offenbart die US-A-5920649 die schräge Beleuchtung jeder Braille-Erhebung und die Erfassung der dadurch entstehenden Schatten auf der Oberfläche mittels einer Kamera und Auswertung durch eine geeignete Software.

Die FR-A-2531793 dagegen tastet zwar das Braille-Dokument zeilenweise ab, beleuchtet dabei jedoch mittels einer Lichtquelle und nimmt die Reflexionen mittels eines Lichtsensors auf, wobei sich die Braille-Erhebungen von der normalen Oberfläche dadurch unterscheiden lassen, dass die Rückstreuung der Braille-Erhebungen zum Sensor geringer ist als die der übrigen Oberflächenanteile, da die sphärische Oberfläche der Braille-Erhebungen das Licht in verschiedene Richtungen streut.

Schließlich zeigt EP-A-1341141 noch eine elektromechanische Abtastung von Braille-Punkten.

### III. Darstellung der Erfindung

### a) Technische Aufgabe

Es ist daher die Aufgabe gemäß der Erfindung, diese Überprüfung mit einer möglichst hohen Verarbeitungsgeschwindigkeit und möglichst geringem Aufwand zu lösen.

### b) Lösung der Aufgabe

Diese Lösung ist im Anspruch 1 beschrieben. Vorteilhafte Ausführungsformen ergeben sich aus den Unteransprüchen.

Indem die Wiederholung der Einzelbildermittlung in geringerem Abstand erfolgt, als der Durchmesser einer Braille-Erhebung groß ist, wird zuverlässig vermieden, dass bei der optischen Kontrolle eine Braille-Erhebung oder gar eine ganze Zeile oder Spalte von Braille-Erhebungen nicht detektiert und damit übersehen wird.

Wenn der Abstand der Einzelbildaufnahmen dabei sogar geringer ist als ein Drittel oder gar ein Viertel des Durchmessers einer Braille-Erhebung, kann umso genauer die Lage des Mittelpunkts der jeweiligen Erhebung als auch/oder der absoluten Höhe der Erhebung aus den Einzelbild-Daten bestimmt werden und damit nicht nur das prinzipielle Vorhandensein einer Braille-Erhebung an einer bestimmten Position, sondern auch deren ausreichend exakte Positionierung und ausreichende Höhe, wie es für das sichere Benutzen der Braille-Schrift mittels manueller Abtastung notwendig ist.

Denn die Kontrolle für das richtige Aufbringen der Braille-Schrift erfüllt mehrere Zwecke: Zum einen muss unbedingt sichergestellt werden, dass durch Falschpositionierung oder Fehlen von Erhebungen an bestimmten Positionen eine Fehlinformation durch die Braille-Schrift übermittelt wird.

Zum anderen muss sichergestellt werden, dass eine prinzipiell richtig in Braille-Schrift wiedergegebene Information durch den manuell abtastenden Benutzer zuverlässig erkannt werden kann, wofür vor allem die Höhe, aber auch der richtige Durchmesser bzw. die Flankensteilheit der Braille-Schrift verantwortlich ist, um beispielsweise Braille-Erhebungen von unabsichtlich auf der gleichen Oberfläche vorhandenen Erhebungen, wie beispielsweise kleben gebliebenen Verschmutzungen, unterscheiden zu können.

Wenn zusätzlich die Bewegungsrichtung bei der Relativbewegung zwischen Objekt und Abbild des Lichtstrahles auf der Oberfläche definiert in Zeilenrichtung oder lotrecht zur Zeilenrichtung der Braille-Schrift erfolgt, kann die Position, an der die Braille-Erhebungen grundsätzlich vorhanden sein können, einfacher bzw. besser vorherbestimmt werden und damit der Auswertungsaufwand reduziert werden.

Wenn beispielsweise die Erstreckungsrichtung des linienförmigen Abbildes parallel zur Zeilenrichtung der Braille-Schrift gewählt wird, kann aus dem Maximum des Abbildes einer Einzelbilddarstellung wegen der in der Aufsicht kreisförmigen Gestalt einer Braille-Erhebung die Lage des Mittelpunktes der Erhebung in Erstreckungsrichtung, also in Zeilenrichtung (X-Richtung) bestimmt werden, selbst wenn das Abbild nicht genau durch den höchsten Punkt der Erhebung verlaufen war.

Andererseits kann aus dem jeweils relativ höchsten Wert der von derselben Erhebung erstellten Einzelbilder die Position des Mittelpunktes der Erhebung in Bewegungsrichtung (Y-Richtung) bestimmt werden, wenn man das Vorhandensein einer bestimmten absoluten Soll-Höhe jeder Erhebung unterstellt.

Damit wird es möglich, bei nur sehr wenigen Einzelbildern pro Erhebung, beispielsweise nur zwei Abbildern, unter Vergleich mit der bekannten Soll-Höhe der Erhebung die Position von deren Mittelpunkt sehr genau zu bestimmen und damit die Einhaltung der vorgeschriebenen maximalen Abweichung der IstPosition der Erhebung von der Soll-Position.

Die tatsächliche Höhe der Erhebungen kann vorab ermittelt werden durch stichprobenartige Abtastung einer oder einiger weniger Erhebungen auf diesem Objekt zum Beispiel durch Einzelbilder mit so geringem Abstand, dass von einer Erhebung mindestens zehn Einzelbilder angefertigt werden.

Eine andere Möglichkeit besteht darin, die Höhenbestimmung aller Erhebungen unabhängig von deren Positionsbestimmung, zum Beispiel vorab, durchzuführen, indem hierfür ein fächerförmiger Lichtstrahl sehr flach auf die abzutastende Oberfläche gerichtet wird und dadurch der Triangulationswinkel zur Blickrichtung der Detektoreinheit für den aufgebrachten Lichtstrahl sehr groß ist, vorzugsweise über 90°, insbesondere zwischen 120° und 180°.

Diese separate Höhenermittlung kann entweder mit einer separaten Vorrichtung durchgeführt werden, oder mit der gleichen Vorrichtung wie die Positionsbestimmung, die jedoch dann in ihrem Triangulationswinkel umschaltbar sein muss.

Ferner kann der Auswertungsaufwand reduziert werden, um die Überprüfung zu beschleunigen und den Hardware-Aufwand für die Echtzeitüberprüfung zu beschränken, wofür unterschiedliche Maßnahmen einzeln oder in Summe zur Verfügung stehen:
Indem nur ein Teil der Bilddaten aus dem optischen Sensor ausgelesen wird, reduziert sich - abhängig von der Art des verwendeten optischen Sensors - die Auslesezeit und damit die Mindestzeit zwischen zwei aufeinander folgenden Scans und es reduziert sich vor allem die zu verarbeitende Datenmenge, was den Zeitbedarf für die gesamte nachfolgende Datenverarbeitung reduziert.

Eine der für die Arbeitsgeschwindigkeit der Anlage wichtigsten Entscheidungen wird vor Beginn des gesamten Einsatzes getroffen, nämlich die Entscheidung, ob der Sensor mit seiner Zeilenrichtung parallel oder quer zur Haupterstreckungsrichtung der Lichtlinie eingesetzt wird. Da das Aktivieren der einzelnen Zeile des Datenspeichers des optischen Sensors Zeit benötigt, also auch dann, wenn nur einige wenige Pixel aus dieser Zeile ausgelesen werden, wird prinzipiell versucht, die Anzahl der beim Auslesen berührten Zeilen des optischen Sensors möglichst gering zu halten.

Dieser Effekt kann sich jedoch ins Gegenteil verkehren, wenn zwar nur ein Teil, aber immerhin ein erheblicher Teil, der im Sensor vorhandenen Zeilen betroffen ist, aber aus jeder Zeile eine relativ große Pixelanzahl benötigt wird.

Eine Reduzierung der gesamten Lichtlinie, die im Regelfall eine Breite von mehreren Pixeln besitzt, auf eine Linienbreite mit nur einem Pixel reduziert alle weiteren Verarbeitungsvorgänge von der Datenmenge her umso stärker, je breiter das Abbild vorher war.

Sofern die Reduzierung auf die Breite eines Pixels die Ergebnisdaten nicht verfälscht, ist es sinnvoll, diese Datenreduzierung so früh wie möglich durchzuführen.

Um wie bei der Beobachtung einer Kleberraupe das Profil der Kleberraupe an einer bestimmten Längsposition der Raupe, also bei einem bestimmten Scan, zu bestimmen, ist es ausreichend, an jeder Längsposition der Lichtlinie diese durch nur einen einzigen Wert, also eine einzige Pixelposition, zu repräsentieren anstelle der vollständigen Helligkeits-Verteilung über die Breite der Lichtlinie, wie sie der optische Sensor im Prinzip liefert.

Man könnte nun als repräsentative Querposition beispielsweise diejenige Querposition an einer bestimmten Längsposition des Abbildes der Lichtlinie, wählen, die über die Breite betrachtet den höchsten Helligkeitswert besitzt.

Nur bei einen über die Breite der Lichtlinie immer gleichmäßigen, z. B. entsprechend einer Gauß-Verteilung, Helligkeitsverteilung, ergibt dies tatsächlich die relevante Mitte des Abbildes, also der Lichtlinie. In der Praxis jedoch kann über die Breite der Lichtlinie betrachtet auch ein am Rand der Lichtlinie liegender Pixel die höchsten Helligkeitswerte besitzen aufgrund von Unregelmäßigkeiten in der Oberflächenstruktur, des Reflektionsgrades oder ähnlichem am Objekt an dieser Stelle.

Ein weniger anfälliger und daher repräsentativerer Wert ist dagegen der Schwerpunkt der Helligkeitsverteilung an einer Stelle der Lichtlinie über dessen Breite, die sich z. B. wie folgt auf einfache Art und Weise annähern lässt:
Für die über die Breite der Lichtlinie nebeneinander liegenden Pixel werden jeweils das Produkt aus Helligkeitswert und Pixelposition ermittelt und diese Produkte aufaddiert.

Diese Summe wird durch die Summe der Pixelpositionen dividiert und ergibt als Ergebnis die Pixelposition, an der der Schwerpunkt der Helligkeitsverteilung dieses Lichtlinienquerstreifens liegt.

Bei welchem Verarbeitungsschritt diese Reduzierung auf nur einen einzigen relevanten Profilpunkt pro Längsposition der Lichtlinie möglich ist, hängt u. a. von der zuvor erwähnten Festlegung der Orientierung der Zeilenrichtung des Sensors relativ zur erwarteten Lichtlinie ab:
Das Reduzieren der Breite des Abbildes, also der Lichtlinie, auf eine einzige Querposition, einen Profilpunkt, ist dann sehr einfach zu erreichen, wenn der optische Sensor ohnehin mit seiner Zeilenrichtung quer, insbesondere lotrecht zur Erstreckungsrichtung der Lichtlinie orientiert war. In diesem Fall muss man aus jeder der Zeilen nur diejenigen Pixel mit ihrem Helligkeitswert aus dem optischen Sensor auslesen, die beleuchtet waren, also einen erhöhten Helligkeitswert gegenüber dem Rest besaßen, und diese Werte und Positionen, also Datensätze, in einen Bilddatenspeicher übertragen.

Anschließend kann aus den Helligkeitswerten der über die Breite der Lichtlinie nebeneinander liegenden Pixeln, z. B. nach der Schwerpunktmethode, ein einziger repräsentativer Profilpunkt berechnet werden, so dass ab dieser Profilpunktberechung die gesamte Lichtlinie, die eigentlich bisher ein breites Lichtband war, nur noch durch eine in Erstreckungsrichtung der Linie hintereinander liegende Abfolge einzelner Profilpunkte besteht.

Hatte das Lichtband vorher eine Breite von 10 Pixeln, reduziert sich dadurch die Datenmenge, die weiterverarbeitet werden muss, bereits um den Faktor 10.

Um zu wissen, welche Pixel einer Zeile sich vermutlich als beleuchtet herausstellen werden, kann man davon ausgehen, dass in einer benachbarten Zeile die beleuchteten Positionen nur wenig unterschiedlich zu denjenigen der vorhergehenden Zone sein werden.

Um nicht zu viele Daten aus jeder Zeile auslesen und in den Bilddatenspeicher übertragen zu müssen, wird dies nur für diejenigen Positionen vollzogen, die auch bei der vorangegangenen Zeile beleuchtet waren zuzüglich eines Sicherheitsbereiches, für den eine Anzahl von Pixeln festgelegt wird aufgrund eines Erfahrungswertes, wie stark sich die beleuchteten Positionen von einer Zeile zur nächsten verändern können.

Bei einem Scan wird dabei die erste Zeile vollständig ausgelesen, um hier erstmals zu ermitteln, welche Positionen auf der Zeile beleuchtet waren, also grob die Lage des Abbildes an dieser Position zu bestimmen.

Anders sieht es dagegen aus, wenn der optische Sensor so angeordnet war, dass seine Zeilenorientierung parallel zur Haupt-Erstreckungsrichtung der Lichtlinie verläuft:
In diesem Fall werden zunächst die Daten derjenigen Zeilen, in denen ein oder mehrere beleuchtete Pixel zu erwarten sind, zeilenweise ausgelesen und in einen Zwischenspeicher übertragen. Erst aus diesem Zwischenspeicher können die Datensätze spaltenweise, hinsichtlich der Breite des Lichtbandes nebeneinander liegend, ausgelesen und aus diesen über die Breite nebeneinander liegenden Werten der Profilpunkt, z. B. nach dem Schwerpunktverfahren, berechnet werden.

Dies ist erforderlich, da aus dem optischen Sensor in aller Regel ein Auslesen von Daten grundsätzlich nur zeilenweise möglich ist, aufgrund der Konfiguration dieser optischen Sensoren.

Um zu wissen, in welchen Zeilen beleuchtete Pixel zu erwarten sind, hilft nur ein Vergleich mit dem vorhergehenden Scan:
Auch hier wird davon ausgegangen, dass sich von einem Scan zum nächsten die Lage der beleuchteten Bildpunkte nur wenig ändert, und es werden deshalb im nachfolgenden Scan nur diejenigen Zeilen ausgelesen, die beim vorherigen Scan ebenfalls beleuchtete Pixel enthielten, zuzüglich wiederum eines Sicherheitsbereiches mit einigen Zeilen darüber und darunter.

Der erste Scan muss aus diesem Grund vollständig durchgeführt werden, um hier wiederum erstmals grob die Lage der Lichtlinie zu bestimmen.

Beide Verfahren können in der Praxis dadurch weiter verfeinert und die Datenreduzierung vergrößert werden, in dem aus der Gesamtfläche des optischen Sensors nur die Daten eines Teilbereiches ausgelesen werden, nämlich desjenigen Teilbereiches, indem man die Aufwölbung der Lichtlinie gegenüber deren ansonsten geradem Verlauf vermuten kann, sofern entweder in den ausgelesenen Datensätzen die Position des jeweiligen Pixels mit enthalten ist oder lediglich die qualitative und quantitative Form der Aufwölbung interessiert, nicht jedoch deren Position innerhalb der gesamten Sensorfläche.

Auf diese Art und Weise werden bei der ersten Methode (Orientierung der Sensorzeilen lotrecht zur Erstreckungsrichtung der Lichtlinie) von vornherein nur diejenigen Zeilen ausgelesen und bearbeitet, die im Bereich der Aufwölbung liegen bzw. bei der zweiten Methode (Zeilenorientierung des Sensors parallel zur Erstreckungsrichtung der Richtlinie) nur die Datensätze aus denjenigen Abschnitten der interessierenden Zeilen ausgelesen, in denen die Aufwölbung zu erwarten ist.

Welcher Bereich dies ist, kann in der Regel nur dadurch festgestellt werden, dass beim ersten Scan die Bilddaten der kompletten Sensorfläche betrachtet und verarbeitet werden, und daraus die Position der Erhebung ermittelt und festgehalten wird. Auch hier wird für die nachfolgenden Scans jeweils davon ausgegangen, dass sich die Position der Erhebung gegenüber dem vorhergehenden Scan nur geringfügig ändern kann, und deshalb bei jedem Scan nur dasjenige Fenster innerhalb der Sensorfläche betrachtet und verarbeitet wird, in dem beim vorhergehenden Scan die Aufwölbung gelegen hatte zuzüglich eines umlaufenden, als Pixelanzahl festgelegten, Sicherheitsbereiches.

Das zu betrachtende Fenster wird dabei so klein wie möglich festgelegt, um bei geringst möglicher Datenmenge die Ergebnisdaten unverfälscht berechnen zu können.

Um den sehr rechenintensiven Schritt einer ersten Division, wie sie bei der Schwerpunktberechnung notwendig ist, zu vermeiden, wird - da als Ergebnis eine relativ kleine Zahl zu erwarten ist - statt einer Division das mehrfache schrittweise Subtrahieren des Nenners vom Zähler durchgeführt, was als Ergebnis eine ganze Zahl ergibt. Diese Vorgehensweise kann auch für die Dezimalstellen hinter dem Komma durchgeführt werden, da jedoch als Endergebnis ganze Zahlen gewünscht werden, muss anschließend mit Zehnerpotenzen multipliziert werden, so dass aus der Dezimalzahl eine ganze Zahl wird.

Ein weiteres Problem besteht darin, dass die Erstreckungsrichtung der Lichtlinie, also der Verlaufsrichtung abgesehen von der Aufwölbung, zwar ursprünglich je nach Vorgehensweise parallel zur Linienrichtung oder Reihenrichtung des Sensors ausgerichtet wurde, sich diese Ausrichtung jedoch ändern kann. Wenn beispielsweise die auf einem Karton oder einem Papier aufgebrachte Kleberraupe untersucht werden soll, kann sich dieser Karton bzw. dieses Papier ungewollt vom Untergrund, z. B. einem unterstützenden Tisch, abheben, und damit die Erstreckungsrichtung schräg zur Linien- oder Spaltenrichtung liegen.

Sofern nur das Vorhandensein bzw. Querschnittsgröße, Höhe oder andere Parameter der Kleberraupe und damit der Aufwölbung, in der Lichtlinie kontrolliert werden soll, ist diese Schräglage der Erstreckungsrichtung unerheblich und wird rechnerisch wie folgt eliminiert:
Insbesondere nachdem das ursprünglich breite Lichtband auf eine echte Lichtlinie bestehend aus einzelnen Profilpunkten reduziert wurde, wird die Höhendifferenz des ersten zum letzten der Profilpunkte, nicht unbedingt über die gesamte Erstreckung des Sensors, sondern nur über die betrachtete interessierende Fläche, ermittelt.

Diese Höhendifferenz dividiert durch die Anzahl der Abstände zwischen dem ersten und letzten Profilpunkt wird von allen Profilpunkten abgezogen, jedoch nicht von den niedrigeren der beiden Endpunkte, und das Abziehen erfolgt multipliziert um den Abstand des betreffenden Punktes von dem unveränderten Endpunkt.

Die so "gerade gelegte", also normierter Erstreckungsrichtung kann nun zusätzlich auf ein definiertes Höhenniveau verschoben werden, vorzugsweise allerdings nicht auf das Nullniveau, da auch in der theoretisch gerade verlaufenden Erstreckungsrichtung geringe Abweichungen nach unten, in den negativen Bereich, vorhanden sein können, die bei Ablegen auf Nulllinie ganz verschwinden würden. Besser ist deshalb ein Ablegen auf einem definierten, niedrigen Niveau, also beispielsweise auf - in Pixeln ausgedrückt - einer Höhe von 2 oder 3 Pixel.

Weitere Vereinfachungen beim Berechnen der Ergebnisdaten können durchgeführt werden, jedoch nur abhängig davon, welcher Art die Ergebnisdaten sein sollen, also was genau berechnet und überprüft werden soll.

Am Beispiel der Detektion einer ausreichend dick vorhandenen Kleberraupe interessiert beispielsweise - innerhalb eines gewissen Rahmes - nur, ob die Kleberraupe eine bestimmte Masse, also durchgängig vorhandenes Volumen und damit Querschnittsfläche, besitzt.

Anhand der Konsistenz des verwendeten Klebers kann dies durch unterschiedliche Hilfsparameter sicher bestimmt werden:
Eine einfache Möglichkeit besteht darin, die absolute Höhe der Kleberaupe zu ermitteln ausgehend von der Überlegung, dass das Vorhandensein einer festgelegten Mindesthöhe immer auch das Vorhandensein eines gewünschten Mindestquerschnittes an dieser Stelle bedeutet.

Für die rechnerische Verarbeitung ist diese Methode jedoch eher nachteilig, da sich die absolute Höhe der Kleberraupe in der Praxis immer geringfügig ändert, und derartige singuläre Punkte wie ein Maximum immer schwer und nur mit relativ hohem Rechenaufwand zu bestimmen sind.

Einfacher ist es daher, die Breite der Kleberraupe auf einer bestimmten definierten Messhöhe über dem Untergrund zu ermitteln.

Nach Reduzieren der bandförmigen Lichtlinie auf eine Profilpunkt-Linie, gegebenenfalls dem Geradeziehen und auf Normniveau herabsetzender Profillinie, müssen für die Breitenbestimmung auf Messhöhe lediglich zwei auf dieser Messhöhe liegende Profilpunkte hinsichtlich ihres Querabstandes zueinander bestimmt werden, was einen sehr viel geringeren Rechenaufwand erfordert.

Ebenso kann anstelle des Seitenabstandes dieser beiden auf Messhöhe liegenden Profilpunkte die erste Ableitung, also die Flankenneigung der Kleberraupe in diesen Profilpunkten, ermittelt werden. Hierfür ist der Rechenaufwand naturgemäß etwas größer, da das Berechnen der ersten Ableitung zusätzlichen Rechenaufwand erfordert, jedoch ist die daraus erzielbare Aussage genauer, denn mit der Neigung ändert sich vor allem die Fußbreite der Kleberaupe und damit relativ stark die Querschnittsfläche.

Eine weitere Verringerung der Verarbeitungszeit durch Reduzieren der Verarbeitungsmenge an Daten kann dadurch erfolgen, dass von vorneherein - selbst wenn nur der interessierende Bereich innerhalb der Sensorfläche aus dem Sensor ausgelesen wird - nicht die Daten jedes Pixels, sondern nur bestimmter Pixel in definierten Abständen, z. B. jedes dritten Pixels in Längsrichtung und jedes zweiten Pixels in Querrichtung oder ähnliches, ausgelesen und weiterverarbeitet wird.

Ob dies zu einer noch zulässigen Vergröberung der Ergebnisdaten führt, muss im Einzelfall anhand der vorhandenen Einflussfaktoren überprüft werden.

In Bewegungsrichtung, der Verlaufsrichtung des Objektes werden die Ergebnisdaten, beispielsweise auch bereits die Profilpunkt-Linien, mittels der CPU rechnerisch zusammengesetzt auf Basis der inneren Taktung der Produktionsmaschine, die als Steuertakt für dieses Zusammensetzen benutzt wird, und zu diesem Zweck von der Maschine an die CPU geliefert werden muss.

Indem auch eine notwendige Zwischenspeicherung der Bilddaten innerhalb der Verarbeitungseinheit, z. B. des FPGA, erfolgt, sind die Übertragungszeiten in und aus dem Zwischenspeicher gering.

Indem die elektronische Verarbeitungseinheit neben dem Speicher auch eine CPU enthält, handelt es sich um eine Einchip-Lösung, die mit wenig Bauraum und geringem Energiebedarf auskommt.

Dabei kann die CPU auch aus Logikschaltelementen gebildet sein, die innerhalb des FPGA vorhanden sind, so dass eine sehr genau zweckgerichtete CPU erstellt werden kann mit dem geringst möglichen Verbrauch an Ressourcen des FPGA und damit dessen optimaler Ausnutzung.

Die Verarbeitungsgeschwindigkeit kann ferner dadurch erhöht werden, dass innerhalb der Verarbeitungseinheit, z. B. dem FPGA, mehrere Datensätze gleichzeitig bearbeitet werden, insbesondere so viele Datensätze, wie der Sensor parallele Ausgänge besitzt.

Die Verarbeitungsgeschwindigkeit wird jedoch auch erhöht, indem sequenziell nacheinander durchzuführende Verarbeitungsschritte an einem Pixel bzw. Datensatz zeitgleich durch unterschiedliche Elemente derselben Verarbeitungseinheit durchgeführt werden, was bewirkt, dass der nächste Scan nicht erst dann durchgeführt werden kann, wenn die Bilddaten des vorhergehenden Scans vollständig, also bis zu Erzielung der Ergebnisdaten, abgearbeitet sind, sondern bereits früher.

Um die vorbeschriebenen günstigen Verfahrensweisen vollziehen zu können, weist die Vorrichtung bevorzugt folgende Merkmale auf:
Die Verarbeitungseinheit ist entweder ein werkseitig programmierbarer Gate-Array (FPGA) oder bei größeren Stückzahlen ein fest gebrannter Gate-Array oder ein digitaler Signalprozessor.

Dadurch kann die gesamte Verarbeitungseinheit für die Bilddaten bis zur Erzielung der Ergebnisdaten in dem Gehäuse untergebracht werden, in dem sich auch die Lichtquelle und die Detektoreinrichtung befindet und ohne das eine separate Kühlung oder Datenweiterleitung an einen externen Prozessor oder PC notwendig ist. Dadurch kann der Gesamtdetektor als autarke Einheit geliefert und verbaut werden.

Die Wahl eines CMOS-Sensors als optischem Sensors gegenüber z. B. einem CCD-Sensor ist deshalb vorteilhaft, weil nur ein CMOS-Sensor das Auslesen von Daten auch nur über Teilbereiche einer Zeile zulässt, und erst damit eine Untersuchung nur eines interessierenden Bereiches der Sensorfläche möglich ist.

Indem der Bilddatenspeicher und ggf. auch der Zwischenspeicher innerhalb der Verarbeitungseinheit, z. B. eines FPGA, vorhanden ist, kann der Zeitverlust für die Datenübertragung gering gehalten werden.

Indem die Abstrahlrichtung der Lichtquelle in einem gewünschten Winkel zur Beobachtungsrichtung der Detektoreinrichtung steht, sind für diese beiden Richtungen zueinander keine weiteren Justierungsmaßnahmen mehr notwendig. Durch die Winkeljustierung des Gehäuses zum Objekt wird lediglich der absolute Auftreffwinkel des Lichtstrahles auf der Objektoberfläche eingestellt und dabei vorzugsweise so, dass Beobachtungsrichtung und Einfallsrichtung des Lichts symmetrisch zur Lotrechten auf der Objektoberfläche stehen, sofern es sich, wie bei Kartonmaterial, um ein schwach reflektierendes Material handelt. Bei einem stark reflektierenden Material würde dies zu einer Überbelichtung des Sensors führen und der absolute Einstrahlwinkel müsste geändert werden.

Durch die Anordnung auf der Platine, auf der sich die Verarbeitungseinheit befindet, parallel zur Hauptebene des Gehäuses kann ein sehr schmal bauendes, plattenförmiges Gehäuse von höchstens ca. 2 cm Dicke erzielt werden. Damit ist das Gehäuse höchstens so breit wie die Beobachtungsbreite des gesamten Detektors auf der Objektoberfläche, so dass auch bei vielfacher Anordnung solcher Detektor-Einrichtungen nebeneinander kein Platzproblem aufgrund der Gehäusebreite entsteht. Dazu trägt auch bei, dass sowohl die Lichtquelle, insbesondere eine Laser-Patrone, mit einer Haupterstreckungsrichtung parallel zur Hauptebene im Gehäuse angeordnet ist, und der optische Sensor zwar quer zu ihr steht, seine Breite jedoch geringer ist als die Gehäusebreite.

Auch Reparaturen werden dadurch erleichtert, da durch Abnahme der Seitenfläche die größte Seite offen liegt und alle Reparaturen gut durchgeführt werden können.

Eine sehr kompakte Gehäuseabmessung auch innerhalb der Hauptebene des Gehäuses wird ferner dadurch erzielt, dass die Blickrichtung der Detektoreinheit innerhalb des Gehäuses einmal durch einen Spiegel umgelenkt wird und die ursprüngliche Blickrichtung innerhalb des Gehäuses damit ausgehend von dem flächigen optischen Sensor parallel zu einer der Schmalseiten des Gehäuses gelegt werden kann, beispielsweise derjenigen Schmalseite, in der sich die Durchlassöffnungen für den Lichtstrahl oder den reflektierten Strahl zur Detektoreinrichtung befinden.

Dadurch sind Lichtquelle und Detektoreinheit kompakt und nahe beieinander untergebracht, während der Großteil des übrigen Raumes im Gehäuse für z. B eine einzige, großflächige Platine zu Verfügung steht, auf der die Auswerteeinheit komplett untergebracht ist.

### c) Ausführungsbeispiele

Ausführungsformen gemäß der Erfindung sind im Folgenden beispielhaft näher beschrieben. Es zeigen:
- Fig. 1:: eine Detektoreinheit gemäß der Erfindung in der Seitenansicht und Frontansicht,
- Fig. 2:: Prinzipdarstellungen zu Positions- und Höhenbestimmungen,
- Fig.3:: ein Schaubild zu ersten Reduzierungsmethoden der Bilddatenverringerung,
- Fig. 4:: ein Schaubild zu weiteren Reduzierungsmethoden der Bilddatenverringerung, und

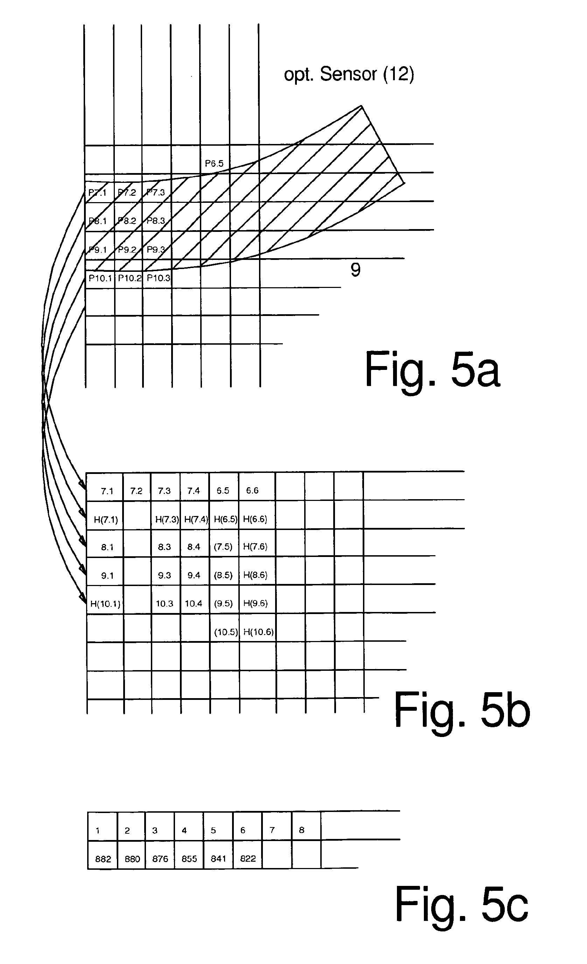

- Fig.5:: ein Schaubild zu weiteren Reduzierungsmethoden der Bilddatenverringerung.

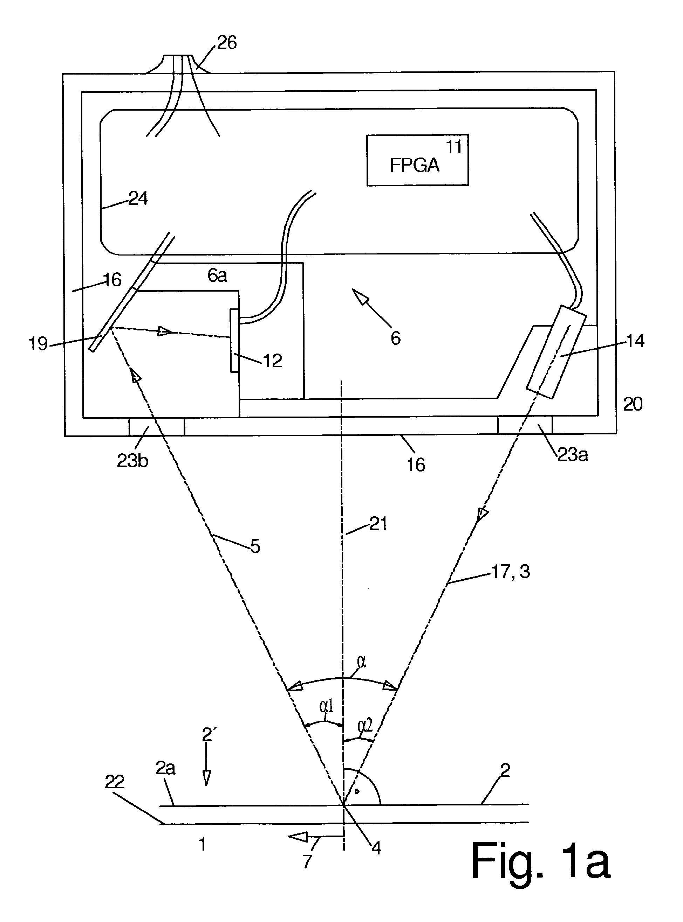

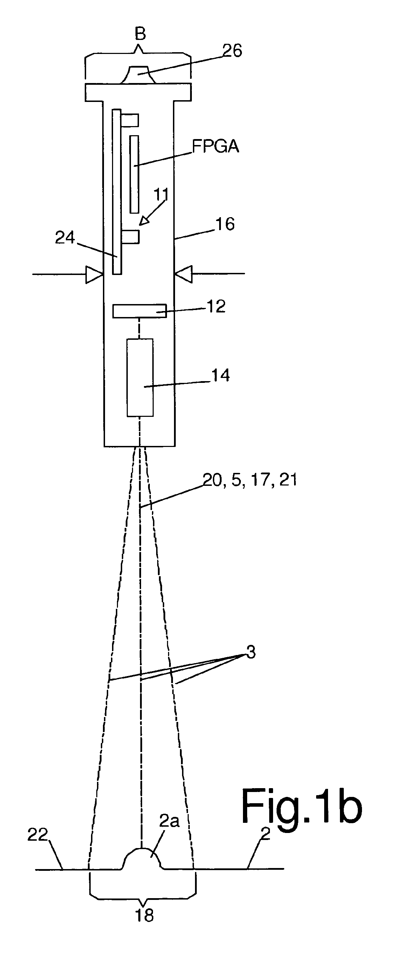

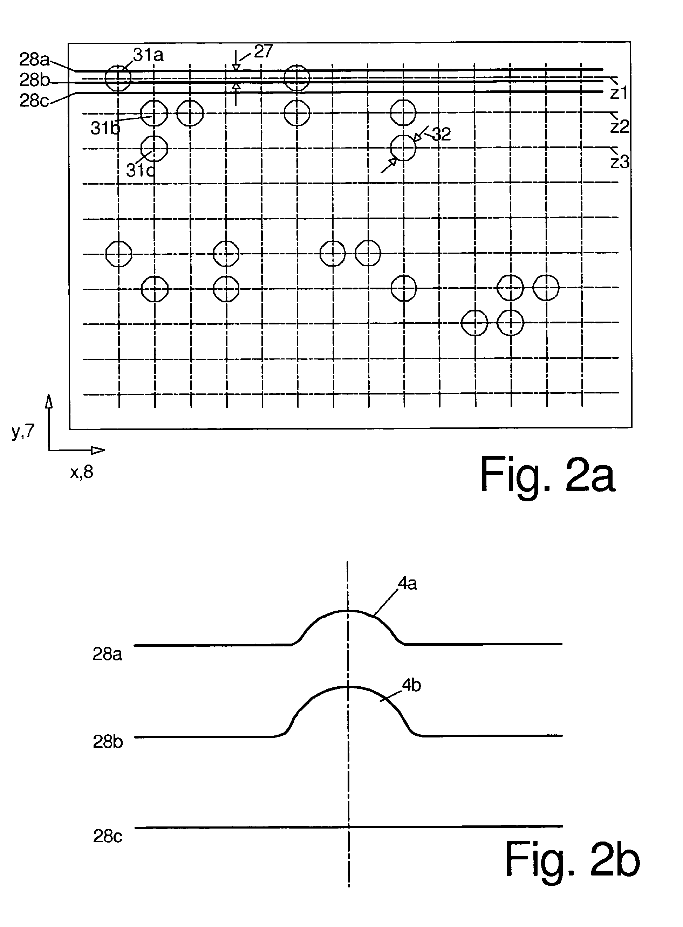

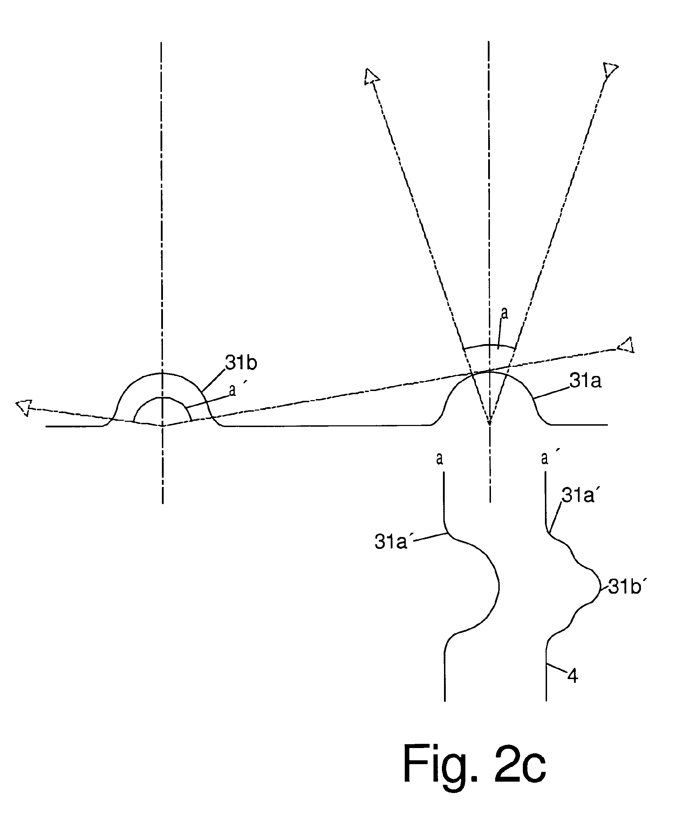

Figur 1 zeigt eine Detektoreinheit in der Seitenansicht, die auch erkennen lässt, wie das bekannte Lichtschnitt-Triangulationsverfahren prinzipiell funktioniert:
Dabei wird ein Lichtstrahl 3 auf die Oberfläche 2 eines Objektes 1 gerichtet und erzeugt dort ein Abbild 4, welches aufgrund der Fächerform des Lichtstrahles 3 - wie in Figur 2 ersichtlich - linienförmig ausgebildet ist. Das von der Oberfläche 2 des Objektes 1 reflektierte Abbild 4 des Lichtstrahles 3 wird von einer Detektoreinrichtung 6 aufgenommen, die aus z. B. einem flächigem, optischen Sensor 12 sowie einer damit verbundenen elektronischen Verarbeitungseinheit 11 zum Verarbeiten der vom Sensor 12 aufgenommenen Bilddaten und berechnen der Ergebnisdaten.

Damit sich auf dem optischen Sensor 12 ein Abbild 4 abzeichnet, welches Rückschlüsse auf die tatsächliche Kontur 2' der Oberfläche 2 an dieser Stelle zulässt, dürfen die Abstrahlrichtung 17 des Lichtstrahls 3 und die Blickrichtung 5 der Detektoreinheit 6 nicht zusammenfallen, sondern müssen sich durch einen Triangulationswinkel α unterscheiden. Vorliegend sind diese beiden Richtungen so gewählt, dass sie symmetrisch beidseits der Lotrechten 21 auf die Oberfläche 2 liegen, also von dieser jeweils einen Zwischenwinkel α₁ = α₂ einnehmen.

Eine Unebenheit, beispielsweise eine Erhebung 2a, auf der Oberfläche 2 im Auftreffbereich des Lichtstrahles 3, wird als Abbild 4 auf der Oberfläche 2 und damit auch auf dem Sensor 12 keine gerade Linie, sondern eine Linie mit einer Aufwölbung darin ergeben, wobei diese Aufwölbung des Abbildes 4, also der Lichtlinie, abhängig von dem Triangulationswinkel α und der Aufteilung in die Zwischenwinkel α₁ und α₂ sich von der Form der Aufwölbung 2a geschnitten entlang der Lotrechten 21 unterscheiden kann. Wegen der bekannten Winkel α, α₁, α₂ sowie der Fokussierung auf die Oberfläche und/oder der Bekanntheit des Abstandes der Detektoreinheit von der Oberfläche 2 kann aus den Abmessungen des Abbildes 4 auf die tatsächlichen Abmessungen der Aufwölbung 2a auf der Oberfläche 2 rechnerisch geschlossen werden.

Wie Figuren 1 und 2 zeigen, sind nicht nur die erwähnten Komponenten der Detektoreinrichtung 6, sondern auch die Lichtquelle 14 zur Erzeugung des ausgesandten Lichtstrahles 3 gemeinsam innerhalb des Gehäuses 16 der Detektoreinheit untergebracht.

Wie Figur 1 zeigt, ist die Detektoreinheit z.B. auch von den Abmessungen in der Hauptebene 20 sehr kompakt aufgebaut, was dadurch erreicht wird, dass die Lichtquelle 14, in der Regel eine Laserpatrone, nahe des für den Lichtstrahl vorgesehenen Durchlasses 23a im Gehäuse 16 angeordnet ist und der optische Sensor 12 nahe des anderen Durchlasses 23b, die sich beide in einer der Schmalseiten des Gehäuses befinden, wobei zwischen diesem Durchlass 23b und dem optischen Sensor 12 eine Umlenkung des eintreffenden Lichtstrahls, also der Blickrichtung 5, über einen Spiegel 19 in eine Richtung parallel zu der Außenkante, in der sich die Durchlässe 23a, b befinden, erfolgt.

Sowohl der Sensor 12 als auch der Spiegel 19 sind dabei an einem Detektor-Basiskörper 6a befestigt, der seinerseits am Gehäuse 16 der Einheit fixiert ist.

Dadurch verbleibt auf der von der Außenseite mit den Durchlässen 23a, b abgewandten Hälfte des Gehäuses ausreichend viel Platz, um dort eine in der Hauptrichtung 20 des Gehäuses liegende Platine 24 anzuordnen, die die gesamte elektronische Verarbeitungseinheit 11 enthält und mit dem Sensor 12 über elektrische Leitungen ebenso in Verbindung steht wie mit der Lichtquelle 14. Die von der Verarbeitungseinheit 11 ermittelten Ergebnisdaten werden über einen Stecker 26 ausgegeben.

Diese beispielhaft beschriebene Anordnung der Komponenten im Inneren der Detektoreinheit ist jedoch keineswegs zwingend die damit bewirkten Vorgehensweisen:
Die nach dem Lichtschnittverfahren hergestellten Einzelaufnahmen werden in zeitlich schneller Abfolge wiederholt, um die sich in Bewegungsrichtung 7 relativ zur Detektoreinheit bewegende Oberfläche 2 des Objektes 1 ständig zu beobachten. Da dies z. B. an einer Produktionsmaschine für das Objekt 1 und/oder die Erhebungen 31 a, b auf der Basisfläche 2, beispielsweise auf einem Karton als Basisfläche 22, durchgängig geschehen soll, ist es notwendig, dass die Berechnung der Ergebnisdaten zeitaktuell geschieht, also von der Verarbeitungseinheit die Ergebnisdaten genauso schnell, also im gleichen Rhythmus, geliefert werden müssen, wie die einzelnen Aufnahmen von dem Sensor 12 angefertigt werden.

Um dies zu erreichen, wird versucht, die für das gewünschte Ergebnis, nämlich eine Bestimmung bestimmter geometrischer Parameter, wie etwa Höhe, Position etc., der Erhebung 31 relevante Datenmenge so früh wie möglich zu reduzieren und damit den für die Berechnung der Ergebnisdaten notwendigen Rechenaufwand zu minimieren. Hierfür werden mehrere Methoden vorgeschlagen, die auch ergänzend zueinander eingesetzt werden:
Das schnelle Bestimmen der Ergebnisdaten wird zum einen dadurch gefördert, wenn man zum Ermitteln der Ergebnisdaten mit möglichst wenigen Einzelaufnahmen auskommt, deren Ergebnisse verarbeitet werden müssen.

So zeigt Fig. 2a die Abtastung eines in den typischen dreizeiligen Punktrastern verfassten Braille-Textes mit einer Erstreckungsrichtung (8) in Zeilenrichtung und einer Bewegungsrichtung (7) quer zur Zeilenrichtung, wobei der Abstand (27) der linienförmigen Abbilder (4a, b) in Bewegungsrichtung (7) etwa dem halben Durchmesser (32) einer Erhebung (31) entspricht.

Dadurch wird - wie in Fig. 2b am Beispiel der Erhebung (31 a) dargestellt - diese Erhebung von zwei aufeinander folgenden Scans (28a, b) erfasst, während der nächste Scan (28c) keine Erhebung (4a) mehr anzeigt.

Die Lage der Erhebung, also beispielsweise deren Mittelpunkt (33) in X-Position, ist bekannt aus der X-Position des jeweils maximalen Wertes der Abbilder (4a, b) der Aufwölbungen der beiden Scans (28a, b), die vorzugsweise auf gleicher X-Position liegen, vor allem wenn die Zeilenrichtung der Braille-Schrift mit der Erstreckungsrichtung der Abbilder übereinstimmend gewählt wurde.

Die Y-Position in Bewegungsrichtung (7) kann ermittelt werden, indem die absolute Höhe der Erhebung (31 a) als bekannt unterstellt wird oder tatsächlich bekannt ist und mit der höchsten tatsächlichen Höhe, in diesem Fall der Erhebung (4b), verglichen wird.

Da der nächste Scan (28c) überhaupt keine Erhebung mehr zeigt und der Abstand (27) der Scans als halber Durchmesser (32) der Erhebungen (31) bekannt ist, kann berechnet werden, in welche Richtung vom Scan (28b) aus in Y-Richtung gesehen und in welcher Entfernung der absolut höchste Punkt, also der Mittelpunkt (33), der Erhebung (31 a) liegt.

Somit sind die Ist-Positionswerte in X- und Y-Richtung des Mittelpunktes (33) bekannt und es kann überprüft werden, ob sie exakt genug mit den Soll-Werten übereinstimmen.

Die tatsächliche Höhe der Erhebungen (31) kann entweder stichprobenartig an einer oder mehreren Erhebungen überprüft werden oder für alle Erhebungen (31) der Braille-Schrift exakt bestimmt werden:
Bei einer stichprobenartigen Überprüfung kommt ebenfalls das vorher beschriebene Triangulationsverfahren in Frage, muss dann jedoch mit einem sehr viel engeren Abstand, also mindestens 5, besser mindestens 10 Scans verteilt über den Durchmesser einer Erhebung, durchgeführt werden. Eine derartige Höhenermittlung für alle Erhebungen kommt wegen der zu großen Datenmenge jedoch nicht in Betracht.

Die tatsächliche Höhe, die ja in der Überprüfung einer vorgegebenen Mindesthöhe besteht, kann jedoch auch durch andere, beispielsweise berührende, Verfahren überprüft werden.

Mittels der Triangulationsmethode kann jedoch unter Umständen eine Überprüfung der Höhe der Erhebungen auf einfache Art und Weise, also mit wenigen oder gar nur einem Scan pro Erhebung (31) bzw. sogar Zeile von Erhebungen (31) durchgeführt werden, indem der Triangulationswinkel stark vergrößert wird und die Auftreffrichtung des fächerförmigen Lichtstrahles (3) sehr flach gewählt wird:
Da der Abstand der Zeilen oder auch Spalten der Erhebungen bei der Braille-Schrift bekannt ist, kann der für die Höhenbestimmung gewählte spezielle Triangulationswinkel (α') zum Beispiel so gewählt werden, dass der Lichtstrahl (3) einerseits bereits den höchsten Bereich einer Erhebung (31a) trifft, andererseits aber in den knapp daneben liegenden Bereichen schon auf den Fußbereich einer Erhebung (31 b) in der nächsten Zeile oder Spalte, also einer dahinter liegenden Erhebung (31 b), auftrifft.

Dies ergibt dann eine sehr spezifische Form eines Abbildes (4x) wie in Fig. 2c dargestellt, bei der sich aus einem unteren Erhebungsteil eine obere Erhebung hervor schiebt.

Aus den geometrischen Parametern dieses spezifischen Abbildes (4x), insbesondere der Höhe der zweiten Stufe der Erhebung (4x), lässt sich schließen, ob die geforderte Mindest-Ist-Höhe der Erhebung vorliegt oder nicht.

Da nur Erhebungen (4x) mit dieser spezifischen Form hier für von Interesse sind, können die Scans also in Bewegungsrichtung so positioniert werden, dass sie genau diese Gestalt aufweisen, oder es können zwar mehr Scans angefertigt, aber nur diejenigen beachtet werden, bei denen die Erhebungen die entsprechende Form aufweisen.

Darüber hinaus sind weiter Methoden denkbar, um bei durchgeführten Scans den Berechnungsaufwand zu reduzieren, wie anhand der Figuren 3ff erläutert wird:
Fast alle Reduzierungsmethoden beruhen darauf, dass mittels der Detektoreinheit nicht zufällige Konturgestaltungen untersucht werden, sondern dabei bestimmte Konturen erwartet werden, wie im Beispielsfall der Figuren eine Aufwölbung 4a in einem ansonsten im wesentlichen linienförmig geraden Abbild 4 in Form einer Lichtlinie bzw. eines Lichtbandes.

Dabei müssen die Abmessungen dieser Aufwölbung 4a ermittelt werden und daraus die tatsächlichen Abmessungen der Erhebung 2a aus der Basisfläche 22 berechnet werden.

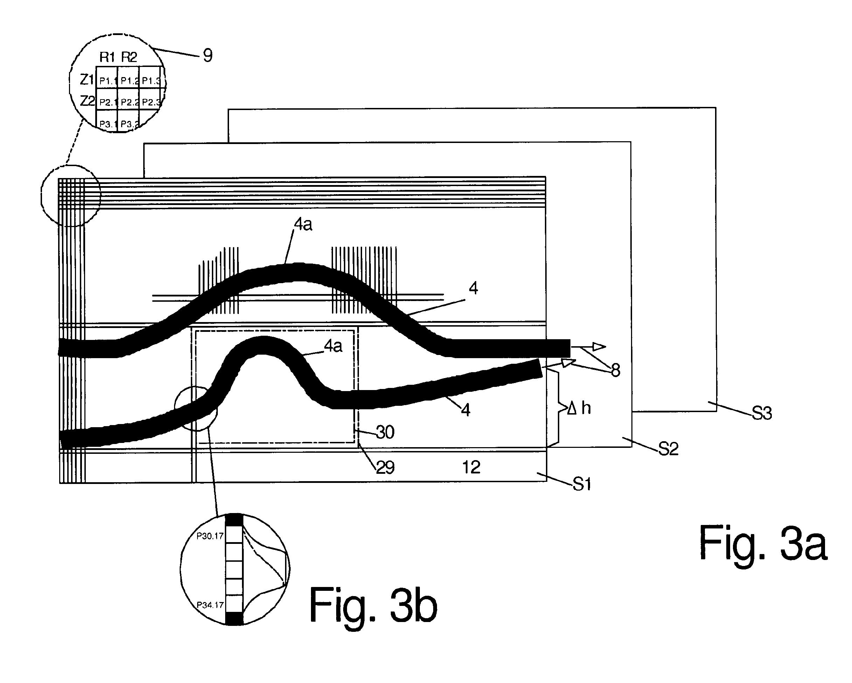

In Figur 3 sind zwei solcher Abbilder 4 und 4' gleichzeitig auf der Oberfläche des optischen Sensors 12 dargestellt, was in der Praxis jedoch nicht erfolgt, da pro Aufnahme, also für jeden Scan S1, S2, immer nur ein solches Abbild sichtbar ist.

Das Abbild 4 besteht darin, dass dort, wo die Lichtlinie auf der Fläche des Sensors 12 auftrifft, die entsprechenden rasterartig in Reihen R1, R2.. und Zeilen Z1, Z2.. angeordneten Pixel P1.1, P1.2.. P2.1. P2.2.. des Sensors 12 stärker beleuchtet sind, also einen höheren Helligkeitswert aufweisen, als diejenigen Pixel, auf denen das Abbild, also der vom Objekt 1 reflektierte Lichtstrahl 3, nicht auftrifft. In der zeichnerischen Schwarz-weiß Darstellung ist dies invers dargestellt, nämlich das Abbild 4 in Form der Lichtlinie dunkel dargestellt.

Die Pixel innerhalb des Abbildes 4 weisen dabei auch unterschiedliche Helligkeitswerte auf, in der Regel am Rand des bandförmigen Abbildes mit einem geringeren und in der Mitte mit einem höheren Helligkeitswert, was jedoch nicht immer der Fall ist und vom Reflektionsverhalten der Oberflächenkontur 2' abhängt.

Eine erste Reduzierungsmethode besteht darin, dass - da nur die Erhebung 4a interessiert - bereits beim Auslesen der Bilddaten 10 aus dem Bilddatenspeicher 9 des Sensors 12 nur die Datensätze derjenigen Pixel ausgelesen und weiterverarbeitet werden, die in dem interessierenden, meist rechteckigen, Bereich 30, welcher die Aufwölbung 4a zeigt, liegen. Dieser interessierende Bereich 30 wird ermittelt, indem beim ersten Scan S1 die Bilddaten sämtlicher Pixel des Sensors 12 ausgelesen werden und dann aufgrund des festgestellten Verlaufs des Abbildes 4 die Lage der Aufwölbung 4a nach Breite und Höhe ermittelt wird.

Bei dem nächsten Scan wird lediglich dieser interessierende Bereich 30 zuzüglich eines umgebenden, hinsichtlich seiner Größe festgelegten, Sicherheitsbereiches 29 als neuer interessierender Bereich 30 ausgelesen.

Auch im weiteren wird entweder bei jedem Scan oder nach einer jeweils festgelegten Anzahl von Scans überprüft, wie der in diesem Scan durch die Lage der Aufwölbung 4a festgelegte interessierende Bereich 30 liegt, und im nächsten oder den nächsten Scans wiederum der neu festgelegte interessierende Bereich 30 einschließlich eines umgebenden Sicherheitsbereiches 29 betrachtet, also ausgelesen wird.

Eine zweite Reduzierungsmethode liegt in der Datenreduzierung durch rechnerisches Reduzieren des an sich über mehrere Pixel breiten Lichtbandes des Abbildes 4', z. B. wiederum nur im interessierenden Bereich, auf die Breite nur eines Pixels.

So besitzt das Abbild 4 in Form einer Lichtlinie beispielsweise in Reihe 17 eine Breite von fünf Pixeln, indem in dieser Reihe die Pixel P30.17 bis einschließlich P34.17 einen erhöhten Helligkeitswert aufweisen.

Da primär der Verlauf des bandförmigen Abbildes 4 bzw. 4' und nicht deren Breite interessiert, ist es ausreichend, den Verlauf des Abbildes 4 auf eine in Erstreckungsrichtung 8 des Bandes hintereinander liegende Abfolge von einzelnen Pixeln, also auf eine Linie mit einer Breite von einem Pixel, zu reduzieren.

Dies kann auf mehrere Arten geschehen, z. B. indem an jeder Längsposition entlang der Erstreckungsrichtung 8 des Abbildes, also in diesem Fall in jeder Reihe, von den Pixeln mit erhöhtem Helligkeitswert dasjenige mit dem höchsten Helligkeitswert als relevantes Pixel gewählt wird, oder dasjenige Pixel in der Mitte der beleuchteten Pixel, in diesem Fall P32.17 aus P30.17 bis P34.17.

Da die Helligkeitsverteilung quer über das bandförmige Abbild 4' nicht immer gleichmäßig, z. B. nicht unbedingt gaußförmig, sein muss, soll eine Gewichtung hinsichtlich des Helligkeitswertes erfolgen und deshalb der Schwerpunkt der über der Breite b des Abbildes 4' aufgetragenen Helligkeitswerte bestimmt werden, was wie folgt geschieht:
Dadurch wird das bandförmige Abbild reduziert auf eine Abfolge einzelner Profilpunkte in Erstreckungsrichtung 8 des Abbildes hintereinander.

Eine dritte Reduzierungsmethode besteht darin, die neben der Erhebung 4a gerade verlaufenden Bereiche des Abbildes 4 parallel zur Zeilen- oder Reihenorientierung des Sensors 12 zu bringen und damit eine Lage des Abbildes wie bei Abbild 4 zu erreichen und nicht wie bei Abbild 4'. Dies wird bewirkt, indem entweder das Gehäuse 16 der Detektoreinheit relativ zu der Basisfläche 22 entsprechend einjustiert wird oder die Lage des Sensors 12 innerhalb des Gehäuses 16. Stattdessen oder auch zusätzlich hierzu kann ohne entsprechende körperliche Ausrichtung des Sensors 12 zur Basisfläche 22 rein rechnerisch ein "Geradeziehen", also eine Normierung des schräg in der Sensorfläche liegenden Abbildes 4' zu einem gerade liegenden Abbild 4, erfolgen.

Zu diesem Zweck wird der Höhenversatz Δh des Anfangs und Endes des schräg liegenden Abbildes 4' auf der Sensorfläche 12 - am besten erst nach einer Reduzierung des Abbildes 4' auf eine Abfolge einzelner Profilpunkte - anteilig von den jeweiligen Profilpunkten abgezogen:
Während der z. B. tief liegende linke Endpunkt unverändert bleibt, werden alle weiter rechts liegenden Profilpunkte um einen solchen Anteil von Δh nach unten gesetzt, der dem Abstand des jeweiligen Profilpunktes vom nicht veränderten Endpunkt in Relation zum gesamten Abstand vom linken zum rechten Endpunkt, also der Breite der Sensorfläche 12, entspricht.

Je besser die Erstreckungsrichtung 8 des Abbildes 4 mit der Richtung der Linien oder Spalten übereinstimmt, um so eher kann auf dieses rechnerische Geradeziehen verzichtet werden, wenn es lediglich auf die Bestimmung von geometrischen Eigenschaften der Erhöhung 4a ankommt.

Eine weitere Reduzierung des Berechnungsaufwandes kann erreicht werden, indem von Anfang an entschieden wird, ob es sinnvoller ist, die Erstreckungsrichtung 8 des Abbildes 4 parallel zur Zeilenorientierung oder parallel zur Reihenorientierung des Sensors 12 zu legen:
Dabei spielt es eine Rolle, dass vom inneren Aufbau her die meisten optischen Sensoren 12 so gestaltet sind, dass die Daten immer nur in Form einer kompletten Zeile von Pixeln ausgelesen werden können und nicht nur ausgewählte Pixel aus einer Zeile. Ein unmittelbar spaltenweises, also reihenweises Auslesen der Daten ist bei den meisten Sensoren gar nicht möglich, sondern dies erfolgt indirekt, indem beim zeilenweisen Auslesen die entsprechenden Pixel derselben Reihe turnusmäßig nacheinander ausgelesen werden.

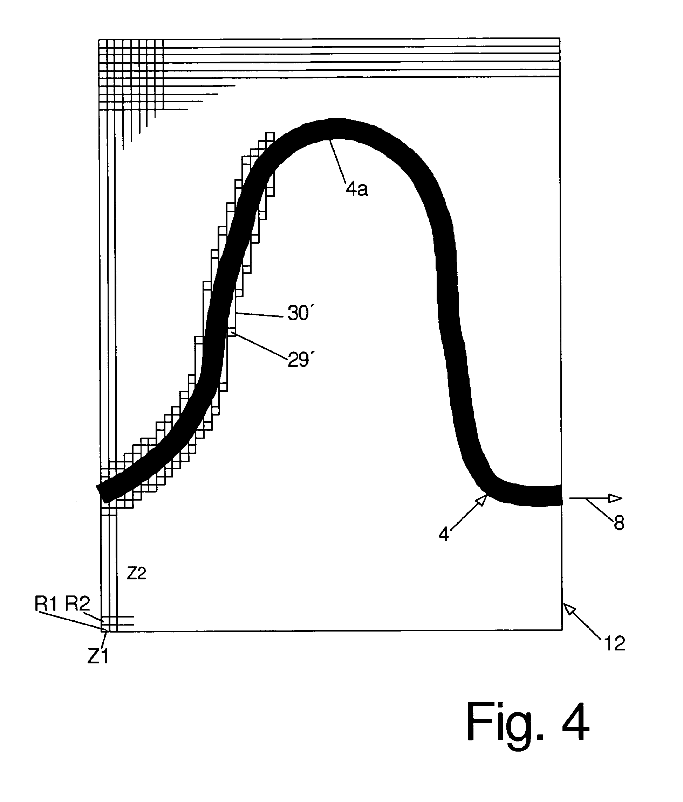

Wenn die erwartete Kontur, also z. B. die Aufwölbung 4a relativ zur Fläche des Sensors voraussichtlich nur eine begrenzte Höhe von z. B. weniger als der Hälfte, insbesondere weniger als ein Drittel der Länge der Sensorfläche betragen wird, wird eine Orientierung der Erstreckungsrichtung 8, also der Richtung der geraden Anteile des Abbildes 4, parallel zur Zeilenrichtung gewählt werden, wie in Figur 3a dargestellt. Erwartet man dagegen, dass die Aufwölbung 4a ohnehin einen größeren Teil der Länge des Sensors 12 einnehmen wird oder gar mehr als die Länge des meist in Breitformat, also mit Zeilenrichtung entlang der größeren Erstreckung vorliegenden Sensorfläche, so wird die Erstreckungsrichtung 8 - wie in Figur 4 dargestellt - parallel zur Reihenrichtung und damit rechtwinklig zur Zeilenorientierung gewählt werden.

Im letzteren Fall wird dann die Datenreduzierung vorzugsweise auch durch folgende Methode erfolgen:
Es wird versucht, wiederum nur den interessierenden Bereich 30' des Abbildes 4 auszuwerten. In diesem Fall jedoch nicht - wie in Figur 3 dargestellt - einen rechteckigen Bereich, in dem die gesamte Aufwölbung 4a Platz findet, sondern im diesem Fall jeweils nur die interessierenden Bereiche 30' an Pixeln bzw. deren Datensätze aus jeder Zeile weiterverarbeitet werden.

Auch in diesem Fall werden beim ersten Scan alle Pixel aus dem Bilddatenspeicher des Sensors ausgelesen, um zumindest bei der ersten Zeile die interessierenden Bereiche 30' dieser Zeile zu ermitteln. Analog zur Vorgehensweise des zweidimensionalen interessierenden Bereiches, wie anhand der Figur 3 erläutert, wird dann der neu interessierende Bereich 30' der nächsten Zeile übereinstimmend mit dem der vorherigen Zeile gewählt, zuzüglich eines daran anschließenden Sicherheitsbereiches 29' an beiden Enden, der wiederum vorzugsweise festgelegt ist durch eine Pixelanzahl.

Die Ermittlung des aktuell interessierenden Bereiches wird entweder in jeder Zeile neu durchgeführt oder in einer Abfolge von jeweils einigen Zeilen.

Die Datensätze der interessierenden Bereiche aus dem Bilddatenspeicher 9, dessen Datensätze in Reihen und Spalten organisiert sind wie die Pixel des Sensors 12, werden bei der rechnerischen Weiterverarbeitung hinsichtlich der Weiterverarbeitung 30' übertragen in einen Zwischenspeicher 25. Dies ist entweder zwingend erforderlich, weil aus dem Bilddatenspeicher 9 - wie vorstehend erwähnt - bei den meisten Sensorbauformen ohnehin nur ein Auslesen der Datensätze in ganzen Zeilen und nicht nur für einige Pixel einer Zeile möglich ist.

Deshalb werden für alle Zeilen zwar die Datensätze der jeweils gesamten Zeile aus den Bilddatenspeichern 12 - wie in Figur 4 dargestellt - ausgelesen, aber nur der jeweils interessierende Bereich 30' in einen Zwischenspeicher 25 übertragen.

Falls es sich um einen Sensortyp handelt, der innerhalb einer Zeile das Auslesen vorgegebener Pixelpositionen ermöglicht, wie etwa ein CMOS-Sensor, rechtfertigt folgende Datenverringerung dennoch die Übertragung in den Zwischenspeicher 25:
Der Datensatz für ein Pixel besteht aus mindestens drei Daten, nämlich einerseits der Pixelposition (x- und y- Wert im Sensor) und andererseits mindestens dem Helligkeitswert (Grauwert), den dieses Pixel auf dem Sensor 12 nach dem Belichten besaß. Da der in jeder Zeile interessierende Bereich 30' jeweils aus einer unmittelbar aufeinander nachfolgenden Abfolge von Pixeln innerhalb dieser Zeile besteht, genügt es für die Standortinformation, in einer ersten Zeile des Zwischenspeichers 25 jeweils diejenige Position festzuhalten, die das erste Pixel mit erhöhtem Helligkeitswert innerhalb einer Zeile besaß. In den Feldern des Zwischenspeichers 25 unter dieser Positionsangabe sind dann lediglich noch die Helligkeitswerte dieses ersten und der nachfolgenden Pixel mit erhöhtem Helligkeitswert innerhalb des jeweiligen interessierenden Bereiches, z. B. derselben Zeile, in den Zwischenspeicher 25 eingetragen.

Im Gegensatz zur Pixelanzahl und damit der Anzahl der Datensätze des Bilddatenspeichers 9 ist somit der Datenumfang des Zwischenspeichers 25 zum einen dadurch geringer, dass die Anzahl der Datensätze drastisch verringert wurde (nämlich auf die Anzahl der Pixel mit erhöhtem Helligkeitswert) und andererseits die Datenmenge dadurch reduziert, dass jeder Datensatz zumindest um die um die Positionsangabe verringerte Datenmenge, beispielsweise nur ein Drittel der ursprünglichen Datenmenge, besitzt.

Aus den Informationen einer Reihe R1, R2. aus dem Zwischenspeicher 25, die aus der Positionsangabe und den nachfolgenden Helligkeitswerten besteht, lässt sich anschließend - beispielsweise nach der Methode der SchwerpunktsBestimmung - für den Querschnitt des Abbildes 4 in jeder Zeile ein einziger Profilpunkt berechnen, so dass diese Abfolge einzelner Profilpunkte das gesamte bandförmige Abbild 4 repräsentiert für die weitere Bestimmung der gewünschten geometrischen Daten betreffend die Aufwölbung 4a.

### BEZUGSZEICHENLISTE

- 1: Objekt
- 2: Oberfläche
- 2': Oberflächen-Kontur
- 2a,b: Erhebung
- 3: Lichtstrahl
- 4: Abbild
- 4a,b: Aufwölbung
- 5,5': Blickrichtung
- 6: Detektoreinrichtung
- 7: Bewegungsrichtung
- 8: Erstreckungsrichtung
- 9: Bilddatenspeicher
- 10: Bilddaten
- 11: elektronische Verarbeitungseinheit
- 12: optischer Sensor
- 13a, b: paralleler Ausgang
- 14: Lichtquelle
- 15: Interner Speicher
- 16: Gehäuse
- 17: Abstrahlrichtung
- 18: Beobachtungsbreite
- 19: Spiegel
- 20: Hauptebene
- 21: Lotrechte
- 22: Basisfläche
- 23: Durchlass
- 24: Platine
- 25: Zwischenspeicher
- 26: Stecker
- 27: Abstand
- 28a,b: Scan
- 29: Sicherheitsbereich
- 30: Interessierende Bereich
- 31: Braille-Erhebung
- 32: Durchmesser
- 33: Mittelpunkt
- 34: Höhe

- α: Triangulations-Winkel
- α₁,α₂: Zwischenwinkel
- P1.1: Pixel
- D1.1: Datensatz
- Z1: Zeile
- R1: Reihe
- S1: Scan
- b, B: Breite

## Patentansprüche

1. Verfahren zum berührungslosen Lesen der Braille-Schrift von der Oberfläche von Objekten (1) mittels des Lichtschnitt-Triangulations-Verfahrens, indem
- fächerförmig ein Lichtstrahl (3) auf die Oberfläche (2) des Objektes (1) gerichtet wird,
- das auf der Oberfläche (2) erzeugte Abbild (4), insbesondere ein linienförmiges Abbild (4), des Lichtstrahls (3) auf der Oberfläche (2) von einer in einem Triangulationswinkel (α) zur Blickrichtung (5) angeordneten Detektoreinrichtung (6) aufgenommen und
- diese Einzelbild-Ermittlung unter Relativbewegung von Objekt (1) und linienförmigem Abbild (4) in Bewegungsrichtung (7) quer zur Erstreckungsrichtung (8) des linienförmigen Abbildes (4) definiert vielfach hintereinander durchgeführt wird, und
- aus den so erhaltenen Einzelbild-Daten die Ergebnisdaten berechnet werden, wobei
die Wiederholung der Einzelbildermittlung so oft geschieht, dass der Abstand der Einzelbilder in Bewegungsrichtung (7) nicht größer ist als der Durchmesser (32) einer Braille-Erhebung (31), insbesondere der Abstand maximal 1/3, besser maximal 1/4 des Durchmessers (32) beträgt.

2. Verfahren nach Anspruch 1,
**dadurch gekennzeichnet, dass**
- die Bewegungsrichtung (7) in Zeilenrichtung oder lotrecht zur Zeilenrichtung der Braille-Schrift gelegt wird, und/oder insbesondere
- aus dem Maximum des Abbildes (4) einer Braille-Erhebung (31) die Lage deren Mittelpunkt in Erstreckungsrichtung (8) des linienförmigen Abbildes (4) bestimmt wird und aus dem höchsten Wert der von derselben Erhebung (31) erstellten Abbilder (4a, b...) die Position des Mittelpunktes (33) der Erhebung (31) in Bewegungsrichtung (7) ermittelt wird, und/oder insbesondere
- bei nur zwei Abbildern (4) pro Erhebung (31) aus dem Vergleich der dabei gemessenen Maxima mit der bekannten tatsächlichen Höhen der Erhebung (31) die Position deren Mittelpunkt (33) berechnet wird.

3. Verfahren nach einem der vorhergehenden Ansprüche,
**dadurch gekennzeichnet, dass**
- die tatsächliche Höhe (34) der Erhebung (31) vorab ermittelt wird durch Abtastung einer oder einiger weniger Braille-Erhebungen (31a, b, c) durch Einzelbilder mit so geringem Abstand, dass mindestens zehn Einzelbilder von einer Erhebung angefertigt werden, und/oder insbesondere
- die tatsächliche Höhe (34) aller Erhebungen (31) ermittelt wird durch eine Abtastung, insbesondere eine separate Höhenabtastung, mittels eines sehr großen Triangulationswinkels (α) von mehr als 90 Grad, insbesondere mehr als 120 Grad, und/oder insbesondere
- nur der für die Ermittlung der Ergebnisdaten benötigte Teil der Bilddaten (10) aus dem optischen Sensor (12) ausgelesen und weiterverarbeitet wird.

4. Verfahren nach einem der vorhergehenden Ansprüche,
**dadurch gekennzeichnet, dass**
- abhängig vom erwarteten Verlauf des Abbildes (4), also der Lichtlinie, der optische Sensor (12) mit der Zeilenrichtung parallel oder quer zur Erstreckungsrichtung (8) des Abbildes (4) eingesetzt wird, und/oder insbesondere
- die Datenerfassung und Berechnung der Ergebnisdaten in Echtzeit während der Relativbewegung erfolgt, und/oder insbesondere
- bei einer Breite (b) des linienförmigen Abbildes (4) von mehr als einem Pixel das linienförmige Abbild (4) auf eine Abfolge von Profilpunkten reduziert wird, wobei der einzelne Profilpunkt die Querposition des linienförmigen Abbildes (4) quer zu seiner Erstreckungsrichtung (8) repräsentiert und insbesondere berechnet wird als Schwerpunkt der Helligkeitswerte der entlang der Breite (b) des Abbildes (4) auf einem Querstreifen zur Lichtlinie nebeneinander liegenden Pixel.

5. Verfahren nach einem der vorhergehenden Ansprüche,
**dadurch gekennzeichnet, dass**
- der Schwerpunkt berechnet wird nach der Formel: Summe der Produkte der Helligkeitswerte mit den jeweiligen Pixelpositionen des Querstreifens, dividiert durch die Summe der Helligkeitswerte der Pixel des Querstreifens, und/oder insbesondere
- bei Zeilenorientierung des Sensors (12) lotrecht zur Erstreckungsrichtung (8) des Abbildes (4) nur diejenigen Pixel (z. B. P1.4, P1.5, P1.6) jeder Zeile (Z1...) in den Bilddatenspeicher (9) übertragen werden, die beleuchtet waren und im nächsten Verarbeitungsschritt die Ermittlung des repräsentativen Profilpunktes, insbesondere nach der Schwerpunktsformel, aus diesen in der gleichen Zeile liegenden Pixeln erfolgt.

6. Verfahren nach einem der vorhergehenden Ansprüche,
**dadurch gekennzeichnet, dass**
- die erste Zeile (Z1) vollständig aus dem Sensor (12) ausgelesen wird,
- festgestellt wird, welche Pixelpositionen in dieser Zeile beleuchtet waren, und
- bei allen folgenden Zeilen (Z2, Z3..) jeweils nur die in der vorherigen Zeile (Z1, Z2..) beleuchteten Pixelpositionen (P1.4, P1.5, P1.6) plus ein definierter Sicherheits-Randbereich (+/-1), festgelegt in Pixelanzahl, neben den zuvor beleuchteten Pixelpositionen vom Sensor (12) in einen Zwischenspeicher (25) übernommen wird, und
- anschließend aus dem Zwischenspeicher (25) die darin enthaltenen Datensätze spaltenweise ausgelesen und auf einen einzelnen repräsentativen Profilpunkt, insbesondere nach der Schwerpunktmethode, reduziert werden.

7. Verfahren nach einem der vorhergehenden Ansprüche,
**dadurch gekennzeichnet, dass**
- bei Zeilenorientierung des Sensors (12) parallel zur Erstreckungsrichtung (8) des Abbildes (4) nur aus denjenigen Zeilen (Z1..) aus dem Sensor (12) Daten (D1..) ausgelesen und in den Bilddatenspeicher (9) übertragen werden, in denen beleuchtete Pixel (8) zur erwarten sind, und/oder insbesondere
- beim ersten Scan alle Zeilen des Sensors (12) ausgelesen werden und bei den folgenden Scans nur diejenigen Zeilen, in denen beim Scan vorher beleuchtete Pixel enthalten waren, zuzüglich eines in Zeilen festgelegten Sicherheits-Randbereiches zusätzliche Zeilen darüber und darunter, und/oder insbesondere
- im Zwischenspeicher (25) nur die Helligkeitswerte der Datensätze gespeichert sind und zusätzlich in einer Zusatzzeile die Position des ersten Pixels dieser Spalte in ursprünglichen optischen Sensor (12).

8. Verfahren nach einem der vorhergehenden Ansprüche,
**dadurch gekennzeichnet, dass**
- aus dem optischen Sensor nur die Datensätze des interessierenden Flächenbereiches (30) innerhalb der Sensorfläche ausgelesen werden und als interessierende Fläche die analoge Fläche beim vorhergehenden Scan zuzüglich eines umgebenden Sicherheitsbereiches (29) festgelegt wird, und/oder insbesondere
- beim ersten Scan die Bilddaten des gesamten Sensors ausgelesen und verarbeitet werden.

9. Verfahren nach einem der vorhergehenden Ansprüche,
**dadurch gekennzeichnet, dass**
- in dem elektronischen Verarbeitungselement (11) der Schritt einer Division ersetzt ist durch ein mehrfach hintereinander erfolgendes Subtrahieren des Nenners vom Zähler und dadurch ein z. B. auf ganze Zahlen gerundetes Divisionsergebnis angenähert wird, und/oder insbesondere
- zur Vermeidung von Dezimalzahlen das Ergebnis mit so vielen Zehnerpotenzen multipliziert wird, wie ursprünglich Dezimalstellen vorhanden waren.

10. Verfahren nach einem der vorhergehenden Ansprüche,
**dadurch gekennzeichnet, dass**
- der erste und letzte, Profilpunkt in Erstreckungsrichtung (8) des Abbildes (4) hinsichtlich ihres Höhenversatzes zueinander untersucht werden und
- ihr Höhenversatz (δ h) dividiert durch die Abstände vom ersten bis zum letzten Profilpunkt von allen anderen Profilpunkten bis auf den niedrigsten Profilpunkt abgezogen werden, jeweils multipliziert mit der Anzahl der Profilpunktabstände, die der jeweilige Profilpunkt von dem am niedrigsten liegenden End-Profilpunkt entfernt liegt.

11. Verfahren nach einem der vorhergehenden Ansprüche,
**dadurch gekennzeichnet, dass**
die geradegezogenen Linie auf annähernd Nullniveau gesetzt wird, also der erste und letzte Profilpunkt in Erstreckungsrichtung auf einen definierten Wert, der größer als Null ist, verschoben werden und analog alle anderen Profilpunkte in Erstreckungsrichtung.

12. Verfahren nach einem der vorhergehenden Ansprüche,
**dadurch gekennzeichnet, dass**
die Aufwölbung (4a) im Abbild (4) bzw. die daraus erzeugte Profilpunkt-Linie, deren Erstreckungsrichtung parallel insbesondere zur Zeilenorientierung verläuft, auf einer definierten Messhöhe, die niedriger liegt als die Maximalhöhe der Aufwölbung (4a), der Querabstand der beiden Profilpunkte, die auf dieser Messhöhe liegen, ermittelt wird.

13. Verfahren nach einem der vorhergehenden Ansprüche,
**dadurch gekennzeichnet, dass**
- in einer Messzeile bzw. Messspalte, die parallel zur Erstreckungsrichtung (8) unterhalb des Maximums der Aufwölbung (4a) verläuft, der minimale und/oder der maximale Abstand der beleuchteten Profilpunkten (6.4, 6.8) ermittelt wird, und insbesondere die Mitte zwischen den so ermittelten Rändern der Aufwölbung (4a) , und/oder insbesondere
- für die Aufwölbung (4a) im Abbild (4) bzw. die daraus erzeugte Profilpunkt-Linie, deren Erstreckungsrichtung parallel insbesondere zur Zeilenorientierung verläuft, auf einer definierten Messhöhe, die niedriger liegt als die Maximalhöhe der Aufwölbung (4a), die erste mathematische Ableitung der Koordinaten beider Profilpunkte, die auf dieser Messhöhe liegen, ermittelt wird.

14. Verfahren nach einem der vorhergehenden Ansprüche,
**dadurch gekennzeichnet, dass**
- sowohl das Auslesen der Bilddaten (10) aus dem Bilddatenspeicher (9), als auch
- das Reduzieren der Bilddatenmenge (10'), und
- die Umrechnung der Bilddaten (10) in Ergebnisdaten sowie gegebenenfalls
- die Berechnung weiterer konturabhängiger Parameter wie beispielsweise das Volumen von Erhebungen (2a, b) über eine Basisfläche (22) etc. innerhalb eines FPGA oder eines Gate-Array oder eines DSP durchgeführt wird.

15. Verfahren nach einem der vorhergehenden Ansprüche,
**dadurch gekennzeichnet, dass**
- in dem elektronischen Verarbeitungseinheit (11), insbesondere dem FPGA, auch die Zwischenspeicherung der Bilddaten (10) in (9) nach dem Auslesen aus dem Sensor bis zur Weiterverarbeitung erfolgt, und/oder insbesondere
- in der elektronischen Verarbeitungseinheit (11), insbesondere dem FPGA, auch eine Central-Prozessing-Unit (CPU) zur Berechnung der Ergebnisdaten aus den bearbeiteten Bilddaten (10), nachgebildet ist, insbesondere mittels auf dem FPGA vorhandener Logik-Schaltelemente, und/oder insbesondere wobei
- die Detektoreinrichtung (6) einen flächigen optischen Sensor (12) umfasst mit matrixförmig angeordneten Pixeln (P1.1, P1.2, .... P2.1, P2.2...) und analog entsprechend zugeordneten Pixel-Datensätzen (D1.1...) aufweist, wobei
- die elektronische Verarbeitungseinheit (11), insbesondere der FPGA, mehrere Pixel-Datensätze (D1.1, D1.2) gleichzeitig bearbeitet, insbesondere so viele Pixel-Datensätze gleichzeitig, wie der dem Sensor (12) zugeordnete Bilddatenspeicher (9) parallele Ausgänge (13a, b..) besitzt.

16. Verfahren nach einem der vorhergehenden Ansprüche,
**dadurch gekennzeichnet, dass**
die elektronische Verarbeitungseinheit (11), insbesondere der FPGA, mehrere funktional hintereinander ablaufende Operationen gleichzeitig, jedoch für unterschiedliche Pixel (P1.1, P1.2) und/oder unterschiedliche Scans (S1, S2), durchführt.

17. Verfahren nach einem der vorhergehenden Ansprüche,
**dadurch gekennzeichnet, dass**
- in Zeilenrichtung und/oder in Reihenrichtung definiert nur der jeweils n-te bzw. m-te Datensatz aus dem Sensor (12) ausgelesen und weiterverarbeitet wird, und/oder insbesondere
- eine Glättung der Profilpunktlinie und/oder der in Bewegungsrichtung (8) bestimmten Abfolge einander entsprechender Profilpunkte mittels Filtern erfolgt.

## Claims

1. A method for contact-free reading of Braille writing from the surface of objects (1) using the light intersection triangulation method by
- directing a fanned light beam (3) to the surface (2) of the object (1);
- detecting the image (4), generated on the surface (2), in particular a line shaped image (4) of the light beam (3) on the surface (2), by a detection device (6), disposed at a triangulation angle (α) relative to the viewing direction (5);
- performing said single image determination in defined multiple sequence with a relative movement of the object (1) and of the line shaped image (4) in movement direction (7), transversal to the direction of extension (8) of the line shaped image; and
- computing the result data from the single image data thus obtained,
wherein
the repetition of the single image determination is performed often enough, so that the distance of the single images in moving direction (7) is not greater than the diameter (32) of a Braille rising (31), in particular the distance comprising maximally one third, better maximally one quarter of the diameter (32).

2. A method according to claim 1, wherein
- the movement direction (7) is placed in line direction or perpendicular to the line direction of the Braille writing, and/or in particular
- from the maximum of the image (4) of a Braille rising, the position of its center in the extension direction (8) of the line shaped image (4) is determined, and from the maximum value of the images (4a, b...), generated from said rising (31), the position of the center (33) of the rising (31) is determined in movement direction (7), and/or in particular
- the position of the center (33) of said rising (31) is computed in case of only two images (4) per rising (31) from the comparison of the maxima thus measured with the known actual height of the rising (31).

3. A method according to one of the preceding claims, wherein
- the actual height (34) of the rising (31) is determined in advance by scanning one or a few Braille risings (31a, b, c) by single images with such a small distance, so that at least ten single images are made from each rising, and/or in particular
- the actual height (34) of all risings (31) is determined by a scan, in particular by a separate height scan with a very large triangulation angle (α) of more than 90 degrees, in particular more than 120 degrees, and/or in particular
- only the portion of the image data (10) is read out of the optical sensor (12) and processed, which is required for determining the result data.

4. A method according to one of the preceding claims, wherein
- depending on the expected characteristics of the image, thus of the light line, the optical sensor (12) is used with its line direction in parallel or transversal to the direction of extension (8) of the image (4), and/or in particular
- data acquisition and computation of the resultant data is performed real-time during the relative movement, and/or in particular
- the line shaped image (4) is reduced to a sequence of profile dots when the width (b) of the line shaped image (4) is comprised of more than one pixel, wherein the particular profile dot represents the transversal position of the line shaped image (4) transversal to its direction of extension (8) and is computed in particular as the center of gravity of the brightness values of the pixels adjacent to one another along the width (b) of the image (4) on a stripe, transversal to the light line.

5. A method according to one of the preceding claims, wherein
- the center of gravity is computed according to the following formula: sum of the products of the brightness values multiplied by the respective pixel positions of the transversal stripe, divided by the sum of the brightness values of the pixels of the transversal stripe, and/or in particular
- when the line orientation of the sensor (12) is perpendicular to the direction of extension (8) of the image (4), only those pixels (e.g. P1.4, P1.5, P1.6) of each line (Z1...) are transferred into the image data memory (9), which were illuminated, and in the next processing step, the determination of a representative profile point is performed in particular according to the center of gravity formula, from said pixels disposed in the same line.

6. A method according to one of the preceding claims, wherein
- the first line (Z1) is completely read out of the sensor (12);
- it is determined, which pixel positions were illuminated in said line;
- in all subsequent lines (Z2, Z3...), respectively only the pixel positions (P1.4, P1.5, P1.6) illuminated in the preceding line (Z1, Z2...) plus a defined safety rim portion (+/-1), determined as a pixel number, is transposed from the sensor (12) into a buffer (25); and
- subsequently, the data sets included in the buffer (25) are read out from said buffer by column and reduced to a single representative profile point, in particular according to the center of gravity method.

7. A method according to one of the preceding claims, wherein
- in case of a line orientation of the sensor (12) in parallel to the direction of the extension (8) of the image (4), data (D1...) is read out of the sensor (12) only from those lines (Z1...) and transposed into the image data memory (9), in which illuminated pixels (8) are to be expected, and/or in particular
- during a first scan all lines of the sensor (12) are read out and during the subsequent scans, only those lines are read out, in which pixels were included, which were previously illuminated during the scan, in addition to a safety rim portion defined in lines, plus additional lines above and below, and/or in particular
- in the buffer (25), only those brightness values of the data sets are stored, and additionally in an additional line, the position of the first pixel of said column in the original optical sensor (12) is stored.

8. A method according to one of the preceding claims, wherein
- from the optical sensor only the data sets of the surface portion (30) of interest within the sensor surface is read out, and as a surface of interest, the analogous surface is determined during the preceding scan plus a surrounding safety portion (29), and/or in particular
- the image data of the entire sensor is read out and processed during the first scan.

9. A method according to one of the preceding claims, wherein
- in the electronic processing element (11), the step of a division is replaced by a multiple subsequent subtraction of the denominator from the enumerator, and thus a result of the division, which is e.g. rounded to integers, is approximated, and/or in particular
- in order to avoid decimal numbers, the result is multiplied with so many powers of ten, as there were decimal places to begin with.

10. A method according to one of the preceding claims, wherein
- the first and the last profile point in extension direction (8) of the image (4) are analyzed with respect to the elevation difference from one another; and
- their elevation difference (δ h) divided by the distances from the first to the last profile point are subtracted from all other profile points, besides the lowest profile point, respectively multiplied by the number of profile point distances, by which the respective profile point is offset from the end profile point in the lowest position.

11. A method according to one of the preceding claims, wherein
the straight line is placed at approximately zero level, thus the first and the last profile point in extension direction are moved to a defined value, which is greater than zero, and all other profile points in extension direction are moved analogously.

12. A method according to one of the preceding claims, wherein the upward bulge (4a) in the depiction (4), or the profile point line generated there from, whose direction of extension extends in parallel in particular to the line orientation, is determined at a defined measurement elevation, which is lower than the maximum elevation of the upward bulge (4a), the transversal distance of the two profile points is determined, which are disposed at said measurement elevation.

13. A method according to one of the preceding claims, wherein
- in a measurement line or measurement column, which extends in parallel to the extension direction (8), below the maximum of upward the bulge (4a), the minimum and/or maximum distance of the illuminated profile points (6.4, 6.8) is determined, and in particular the center between the thus determined rims of the upward bulge (4a), and/or in particular
- for the upward bulge (4a) in the depiction (4), or the profile point line generated there from, their extension direction runs in parallel in particular to the orientation of the lines at a defined measurement elevation, which is lower than the maximum elevation of the upward bulge (4a), the first mathematical derivative of the coordinates of both profile points, which are disposed at said measurement elevation, is determined.

14. A method according to one of the preceding claims, wherein
- reading out the image data (10) from the image data memory (9) and also
- reducing the image data amount (10');
- converting the image data (10) into result data; and possibly
- computing additional contour dependent parameters, like e.g. the volume of rises (2a, b) above a base surface (22) etc., is performed within a FPGA or a gate-array or a DSP.

15. A method according to one of the preceding claims, wherein
- in the electronic processing unit (11), in particular in the FPGA, also the buffering of the image data (10) in (9) is performed after reading out from the sensor, until they are processed further, and/or in particular
- in the electronic processing unit (11), in particular in the FPGA, also a central processing unit (CPU) for computing the result data from the processed image data (10) is reconfigured, in particular by logical switching elements, disposed in the FPGA, and/or in particular,
wherein
- the detector device (6) comprises an optical surface sensor (12), comprising pixels (P1.1, P1.2, ...P2.1, P2.2, ...) disposed in a matrix, and analogously comprises accordingly associated pixel data sets (D1.1...),
wherein
- the electronic processing unit (11), in particular the FPGA, simultaneously processes several pixel data sets (D1.1, D1.2), in particular simultaneously comprises as many pixel data sets as the image data memory (9), associated with the sensor (12), and comprises parallel outputs (13a, b...).

16. A method according to one of the preceding claims, wherein the electronic processing unit (11), in particular the FPGA, simultaneously performs several operations, functionally running subsequent to one another, but for different pixels (P1.1, P1.2), and/or for different scans (S1, S2).

17. A method according to one of the preceding claims, wherein
- in line direction and/or in row direction in a defined manner, respectively only the n^{th} or the m^{th} data set is read out of the sensor (12) and processed further, and/or in particular
- a smoothing of the profile point line and/or of the sequence of profile points defined in movement direction (8) and corresponding to one another is performed by filters.

## Revendications

1. Procédé pour la lecture sans contact de l'écriture braille de la surface d'objets (1) au moyen du procédé de triangulation par coupe optique dans lequel
- un rayon lumineux (3) est orienté sur la surface (2) de l'objet (1),
- la reproduction (4) générée de la surface (2) en particulier une reproduction linéaire (4) du rayon lumineux (3) est détectée sur la surface (2) par un dispositif détecteur (6) disposé dans un angle de triangulation (α) par rapport au sens du regard (5) et
- cette détermination d'image unique étant effectuée par un mouvement relatif de l'objet (1) et de la reproduction linéaire (4) dans le sens de déplacement (7) transversalement à la direction d'extension (8) de la reproduction linéaire (4) en étant définie plusieurs fois à la suite et
- les données de résultats étant calculées à partir des données d'images uniques ainsi obtenues,
- la répétition de la détermination de l'image unique se produisant tant que la distance des images uniques n'est pas supérieure dans le sens de déplacement (7) au diamètre (32) d'une élévation braille (31) en particulier tant que la distance est de 1/3 au mieux d'1/4 du diamètre (32).

2. Procédé selon la revendication 1,
**caractérisé en ce que**
- le sens de déplacement (7) est placé dans le sens de ligne ou perpendiculairement au sens de ligne de l'écriture braille et/ou en particulier
- la position du point médian est définie dans le sens d'extension (8) de la reproduction linéaire (4) à partir du maximum de la reproduction (4) d'une élévation de braille (31) et la position du point médian (33) de l'élévation (31) est déterminée et une position du point médian (33) de l'élévation (31) est déterminée dans le sens de déplacement (7) à partir de la valeur maximale des reproductions (4a, b...) réalisées de cette élévation (31) et/ou en particulier
- en présence de seulement deux reproductions (4) par élévation (31) la position du point médian (33) de l'élévation est calculée à partir de la comparaison des maxima mesurés avec les hauteurs réelles connues de l'élévation (31).

3. Procédé selon l'une des revendications précédentes, **caractérisé en ce que**
- la hauteur réelle (34) de l'élévation (31) est déterminée au préalable par palpage d'une ou de quelques élévations de braille (31a, b, c) par des images uniques avec une faible distance de sorte qu'au moins dix images uniques d'une élévation sont réalisées et/ou en particulier
- la hauteur réelle (34) de toutes les élévations (31) sont déterminées par un palpage, en particulier par un palpage séparé de hauteur au moyen d'un très grand angle de triangulation (α) de plus de 90 degré en particulier de plus de 120 degrés et/ou en particulier
- uniquement la partie nécessaire à la détermination des données de résultats (10) des données d'images est lue dans le capteur optique (12) et est traitée.

4. Procédé selon l'une des revendications précédentes, **caractérisé en ce qu'**
- indépendamment de la courbe inattendue de la reproduction (4), donc de la ligne de lumière, le capteur optique (12) est utilisé parallèlement au sens de ligne ou transversalement au sens d'extension (8) de la reproduction (4) et/ou en particulier
- la saisie des données et le calcul des données de résultats s'effectuent en temps réel pendant le mouvement relatif et/ou en particulier
- pour une largeur (b) de la reproduction linéaire (4) de plus d'un pixel, la reproduction linéaire (4) est réduite à une succession de points de profil, le point de profil unique représentant la position transversale de la reproduction linéaire (4) transversalement à son sens d'extension (8) et étant calculé en particulier en tant que centre de gravité des valeurs de luminosité, des pixels se trouvant juxtaposés le long de la largeur (b) de la reproduction (4) sur une bande transversale à la ligne optique.

5. Procédé selon l'une des revendications précédentes, **caractérisé en ce que**
- le centre de gravité est calculé selon la formule : somme des produits des valeurs de luminosité par la somme des valeurs de luminosité des pixels de la bande transversale et/ou en particulier
- en cas d'orientation du capteur (12) perpendiculairement au sens d'extension (8) de la reproduction (4) seulement les pixels (par exemple P1.4 P1.5, P1.6) de chaque ligne (Z1...) qui sont illuminés sont transmis dans la mémoire de données d'images (9) et dans l'étape de traitement suivante la détermination du point de profil représentatif s'effectue en particulier selon la formule du centre de gravité à partir de ces pixels se trouvant dans la même ligne.

6. Procédé selon l'une des revendications précédentes, **caractérisé en ce que**
- la première ligne (Z1) est lue entièrement par le capteur (12),
- il est déterminé quelles positions de pixels sont illuminées dans cette ligne et
- dans toutes les autres lignes suivantes (Z2, Z3, ...), uniquement les positions de pixels (P1.4, P1.5, P1.6) illuminées dans la ligne précédentes (Z1, Z2...) plus une zone de bordure de sécurité (+/-1) définie dans le nombre de pixels sont prises en charge à côté des positions de pixels illuminés auparavant, par le capteur (12) dans une mémoire de stockage (25), et
- ensuite les jeux de données contenus dans la mémoire intermédiaire (25) sont lus par colonne et sont réduits à un point de profil représentatif en particulier selon la méthode du centre de gravité.

7. Procédé selon l'une des revendications précédentes, **caractérisé en ce que**
- en cas d'une orientation de ligne du capteur (12) parallèlement au sens d'extension (8) de la reproduction (4) seules les données (D1...) seront lues et transmises à la mémoire de données d'images (9) des lignes (Z1...) du capteur (12) dans lesquels des pixels illuminés (8) sont attendus et/ou en particulier
- lors du premier scan, toutes les lignes du capteur (12) sont lues et dans les scans suivants que les lignes dans lesquelles des pixels illuminés précédemment étaient contenus en plus d'une zone de bordure de sécurité définies dans des lignes en dessous et au-dessous et/ou en particulier
- dans la mémoire intermédiaire (25) ne sont stockées que les valeurs de luminosité des jeux de données et en supplément dans une ligne supplémentaire la position du premier pixel de cette colonne dans le capteur optique d'origine (12).

8. Procédé selon l'une des revendications précédentes, **caractérisé en ce que**
- depuis le capteur optique uniquement les jeux de données de la zone de surface concernée (30) sont lus à l'intérieur de la surface de capteur et en tant que surface intéressante la surface analogue est déterminée lors du scan précédent en supplément d'une zone de sécurité environnante (29), et/ou en particulier,
- lors du premier scan, les données d'images de l'ensemble du capteur sont lues et sont traitées.

9. Procédé selon l'une des revendications précédentes **caractérisé en ce que**
- dans l'élément de traitement électronique (11), l'étape d'une division est remplacée par une soustraction, s'effectuant plusieurs fois successivement, du dénominateur du numérateur et ainsi un résultat de division arrondi à un nombre entier par exemple est approché et/ou en particulier
- pour éviter les chiffres décimaux, le résultat est multiplié par autant de puissances de dix que de chiffres derrière la virgule à l'origine.

10. Procédé selon l'une des revendications précédentes **caractérisé en ce que**
- le premier et le dernier point de profil sont examinés dans le sens d'extension (8) de la reproduction (4) en fonction de leur décalage en hauteur entre eux et
- leur décalage en hauteur (δ h) divisé par les distances entre le premier et le dernier point de profil est déduit de tous les autres points de profil hormis le point de profil le plus bas, est respectivement multiplié au nombre des distances de point de profil, dont est éloigné le point de profil respectif du point de profil d'extrémité se trouvant le plus bas.

11. Procédé selon l'une des revendications précédentes, **caractérisé en ce que** la ligne tirée droite est placée au niveau approchant zéro, donc le premier et le dernier point de profil dans le sens d'extension sont déplacés dans le sens d'extension à une valeur définie qui est supérieure à zéro et de manière analogue tous les autres points de profil dans le sens d'extension.

12. Procédé selon l'une des revendications précédentes, **caractérisé en ce que** pour le bombement (4a) dans la reproduction (4) respectivement la ligne de point de profil générée, dont le sens d'extension s'étend parallèlement à l'orientation de ligne à une hauteur définie qui est inférieure à l'hauteur maximale du bombement (4a), la distance transversale des deux points de profil qui sont à la hauteur de mesure est déterminée

13. Procédé selon l'une des revendications précédentes, **caractérisé en ce que**
- dans une ligne de mesure respectivement de colonne de mesure qui s'étend parallèlement au sens d'extension (8) en dessous du maximum du bombement (4a), la distance minimale et/ou maximale des points de profil illuminés (6.4, 6.8) est déterminée et en particulier le milieu entre les bords ainsi déterminés du bombement (4a) et/ou en particulier
- pour le bombement (4a) dans la reproduction (4) respectivement la ligne de point de profil générée, dont le sens d'extension s'étend parallèlement à l'orientation de ligne à une hauteur définie qui est inférieure à la hauteur maximale du bombement (4a), la première déduction mathématiques des coordonnées des deux points de profil qui se trouvent à cette hauteur de mesure est déterminée.

14. Procédé selon l'une des revendications précédentes **caractérisé en ce qu'**
- aussi bien la lecture des données d'mages (10) dans la mémoire de donnés d'image (9) qu'également
- la réduction de la quantité de données d'images (10') et
- la conversion des données d'mages (10) en données de résultats ainsi qu'éventuellement
- le calcul d'autres paramètres dépendant du contour tels que par exemple le volume d'élévations (2a, b) sur une surface de base (22) etc. sont effectués à l'intérieur d'un FPGA ou d'un Gate-Array ou d'un DSP.

15. Procédé selon l'une des revendications précédentes, **caractérisé en ce que**
- dans l'unité de traitement électronique (11) en particulier le FPGA, le stockage intermédiaire des données d'images (10) en (9) s'effectue également après la lecture du capteur jusqu'au traitement et/ou en particulier
- dans l'unité de traitement électronique (11) en particulier le FPGA, également une unité de traitement centrale (UC) est reproduite pour le calcul des données de résultats issus des données d'images traitées (10) en particulier au moyen des éléments de circuit logique existant sur le FPGA, et/ou en particulier,
- le dispositif détecteur (6) comprend un capteur optique de surface (12) avec des pixels disposés en formant une matrice (P1.1, P1.2, .... P2.1, P2.2...) et présente des jeux de données de pixel (D 1.1....) associés de manière correspondante par analogie,
- l'unité électronique de traitement (11) en particulier le FPGA traite simultanément plusieurs jeux de données de pixels (D 1.1., D1.2) en particulier autant de jeux de données de pixel simultanément que le nombre de sorties parallèles (13a, b..) que possède la mémoire de données d'images associées au capteur (12).

16. Procédé selon l'une des revendications précédentes, **caractérisé en ce que** l'unité électronique de traitement (11) en particulier le FPGA exécute simultanément plusieurs opérations fonctionnelles successives mais pour différents pixels (P1.1, P1.2) et des scans différents (S1, S2),

17. Procédé selon l'une des revendications précédentes, **caractérisé en ce que**
- dans le sens de ligne et/ou dans le sens de rangées défini, seulement le jeu de données respectifs n-te ou m-te est lu dans le capteur (12) et est traité et/ou en particulier
un lissage de la ligne de points de profil et/ou de la succession de points de profils correspondants entre eux, définie dans le sens de mouvement (8), s'effectue au moyen de filtres.
